(19) Europäisches Patentamt / European Patent Office / Office européen des brevets

(11) **EP 3 908 430 B1**

(12) **EUROPEAN PATENT SPECIFICATION**

(45) Date of publication and mention of the grant of the patent:
**10.04.2024 Bulletin 2024/15**

(21) Application number: **20855501.1**

(22) Date of filing: **19.08.2020**

(51) International Patent Classification (IPC):
*B25F 5/02* (2006.01)    *H01M 10/0525* (2010.01)
*H01M 10/058* (2010.01)    *H01M 10/0585* (2010.01)
*H02J 7/00* (2006.01)    *H01M 50/247* (2021.01)
*H01M 50/211* (2021.01)    *H01M 10/42* (2006.01)

(52) Cooperative Patent Classification (CPC):
**H01M 10/425; B25F 5/02; H01M 50/211; H01M 50/247**

(86) International application number:
**PCT/US2020/046974**

(87) International publication number:
**WO 2021/034918 (25.02.2021 Gazette 2021/08)**

(54) **BATTERY PACK**

BATTERIEPACK

BLOC-BATTERIE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **21.08.2019 US 201962889616 P**

(43) Date of publication of application:
**17.11.2021 Bulletin 2021/46**

(60) Divisional application:
**22156920.5 / 4 049 797**

(73) Proprietor: **Black & Decker Inc.**
**New Britain, CT 06053 (US)**

(72) Inventor: **ARMACOST, Craig**
**Parkton, Maryland 21120 (US)**

(74) Representative: **SBD IPAdmin**
**270 Bath Road**
**Slough, Berkshire SL1 4DX (GB)**

(56) References cited:
EP-B1- 2 787 560    WO-A1-2018/119256
US-A1- 2008 268 671    US-A1- 2012 040 221
US-A1- 2015 037 649    US-A1- 2015 380 697
US-A1- 2015 380 697

**Description**

**RELATED APPLICATION**

This application claims the benefit of US Provisional Application Serial No. 62/889,616 filed August 21, 2019.

**TECHNICAL FIELD**

This application relates to a battery pack and a method for manufacturing a battery pack. In one implementation, the battery pack includes a plurality of pouch battery cells.

**BACKGROUND**

Battery packs for cordless power tools are well known. The battery packs may be integral battery packs or removable battery packs. The battery packs may include rechargeable battery cells, making the battery packs rechargeable battery packs, also referred to as secondary battery packs.

Conventional secondary battery packs for cordless power tools, such as drills, circular saws, reciprocating saws, strings trimmers, leaf blowers, lawn mowers and vacuum cleaners, use cylindrical battery cells, as are well known in the art (e.g., see EP2787560B1).

Conventional secondary battery packs for portable electronic devices, such as cellular phones and laptop computers have been known to use pouch type, or simply pouch, battery cells. U.S. Patent Number 9,040,190 describes an example of such a secondary battery pack using an exemplary pouch battery cell.

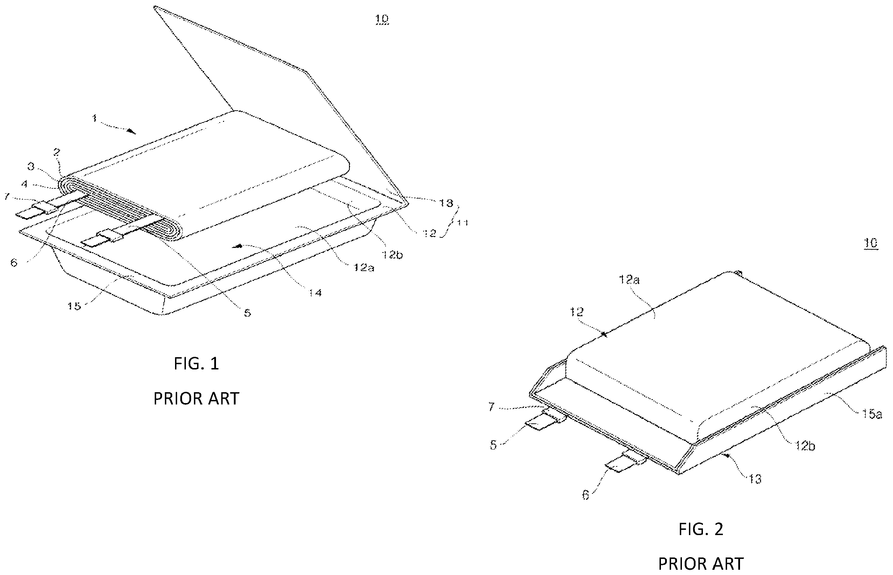

As illustrated in FIGs. 1 and 2, the exemplary pouch battery cell 10 includes an electrode assembly 1 and a pouch case 11 in which the electrode assembly 1 is received. The electrode assembly 1 includes a positive electrode plate 2 of which both side surfaces are coated with a positive electrode active material, a separator 3, and a negative electrode plate 4 of which both side surfaces are coated with a negative electrode active material.

Further, a positive electrode tap (or tab) 5 connected with the positive electrode plate 2 is extended from the positive electrode plate 2 by a length (that may be predetermined) to act as a positive electrode, while a negative electrode tap (or tab) 6 connected with the negative electrode plate 4 is extended from the negative electrode plate 4 by a length (that may be predetermined) to act as a negative electrode. Further, the pouch battery cell 10 includes an electrical insulation tape 7 for preventing (or protecting from) an electrical short between the positive electrode and negative electrode taps 5 and 6 and the pouch case 11. Further, the positive electrode and negative electrode taps 5 and 6 are drawn (or led) outwardly through one side of the pouch case 11. Upper and lower insulation plates are further adhered to the top and bottom of the electrode assembly 1, in order to prevent (or protect) the electrode assembly 1 from contacting with the pouch case 11.

The pouch case 11 is composed of a front surface 12 and a rear surface 13 by folding a pouch in half, where the rear surface 13 is connected with the front surface 12. A cavity 14, which receives the electrode assembly 1, is formed on the front surface 12 by a suitable press process. The cavity 14 is defined by a base 12a and four sides 12b of the front surface 12, as illustrated in FIG. 1. The positive electrode plate 2, the separator 3, and the negative electrode plate 4 are arranged respectively and then wound together in one direction to form the electrode assembly 1 with a jelly-roll structure. The electrode assembly 1 with the jelly-roll structure is placed in the front surface 12 of the pouch case 11 in the cavity 14.

In this case, each end of the positive electrode and negative electrode taps 5 and 6, which are drawn outwardly from each of the electrode plates 2 and 4 of the electrode assembly, is exposed to the exterior of the pouch case 11 which seals portions of the positive electrode and negative electrode taps 5 and 6.

The instant application describes an exemplary battery pack for use with power tools utilizing pouch battery cells and an exemplary method of manufacturing such a battery pack.

**SUMMARY**

An example includes a battery pack, comprising a printed circuit board (PCB) having an array of slots extending from a first side of the PCB to a second side of the PCB, the array having a first column of slots and a second column of slots generally parallel to and adjacent to the first column of slots, the slots of the first column of slots being offset from the slots of the second column of slots in a direction of the columns; the first column of slots having at least a first slot and a second slot and the second column of slots having at least a first slot and a second slot; wherein a distance between the first slot of the first column and a second slot of the first column is greater than a distance between the first slot of the second column and the second slot of the second column.

In a related aspect the battery pack includes a battery cell holder having an array of slots extending from an interior side of a first wall to an exterior side of the first wall, the array having a first column of slots and a second column of slots generally parallel and adjacent to the first column of slots, the slots of the first column of slots being offset from the slots of the second column of slots in a direction of the columns; the first column of slots having at least a first slot and a second slot and the second column of slots having at least a first slot and a second slot; wherein the array of slots of the PCB are aligned with the array of slots of the battery cell holder.

In a related aspect, the battery pack includes a first rib extending from the interior side of the first wall, the rib having a first portion between the first slot and the second slot of the first column of slots and a second portion between the first slot and the second slot of the second column of slots.

In a related aspect, the battery pack includes the first portion of the first rib having a first height (H5) and the second portion of the first rib having a second height (H6) and wherein the first height (H5) is greater than the second height (H6).

In a related aspect, the battery pack includes the first rib comprising a transition portion extending from the first portion to the second portion and wherein the transition portion of the first rib transitions from the first height (H5) to the second height (H6).

In a related aspect, the battery pack includes a second rib extending from the interior side of the first wall, the rib having a first portion between the second slot and the third slot of the first column of slots and a second portion between the second slot and the third slot of the second column of slots.

In a related aspect, the battery pack includes the first portion of the second rib having a first height (H7) and the second portion of the second rib having a second height (H8) and wherein the first height (H7) is less than the second height (H8).

In a related aspect, the battery pack includes the second rib comprises a transition portion extending from the first portion to the second portion and wherein the transition portion of the second rib transitions from the first height (H7) to the second height (H8).

In a related aspect, the battery pack includes the first column of slots including a third slot and the second column of slots including a third slot, wherein a distance (H17) between a major axis of the third slot of the first column and the major axis of the second slot of the first column is less than the distance (H15) between the major axis of the first slot of the first column and the major axis of the second slot of the first column.

In a related aspect, the battery pack includes a distance (H18) between a major axis of the third slot of the second column and the major axis of the second slot of the first column is greater than the distance (H17) between the major axis of the third slot of the first column and the major axis of the second slot of the first column.

An aspect of the present invention includes a battery pack, comprising: at least two pouch battery cells (210, 220), each cell having a first tab and a second tab; a battery cell holder having an array of slots extending from an interior side of a first wall to an exterior side of the first wall, the array having a first column of a plurality of slots and a second column of a plurality of slots generally parallel and adjacent to the first column of slots, the slots of the first column of slots being offset from the slots of the second column of slots in a direction of the columns, wherein each slot is configured to receive a tab of one of the battery cells; the first column of slots having a first slot and a second slot and the second column of slots having a first slot and a second slot; wherein a distance (H15) between a major axis of the first slot of the first column and a major axis of the second slot of the first column is greater than a distance (H16) between a major axis of the first slot of the second column and a major axis of the second slot of the second column.

In a related aspect, the battery pack includes a first rib extending from the interior side of the first wall, the rib having a first portion between the first slot and the second slot of the first column of slots and a second portion between the first slot and the second slot of the second column of slots.

In a related aspect, the battery pack includes the first portion of the first rib having a first height (H5) and the second portion of the first rib having a second height (H6) and wherein the first height (H5) is greater than the second height (H6).

In a related aspect, the battery pack includes the first rib comprising a transition portion extending from the first portion to the second portion and wherein the transition portion of the first rib transitions from the first height (H5) to the second height (H6).

In a related aspect, the battery pack includes a second rib extending from the interior side of the first wall, the rib having a first portion between the second slot and the third slot of the first column of slots and a second portion between the second slot and the third slot of the second column of slots.

In a related aspect, the battery pack includes the first portion of the second rib having a first height (H7) and the second portion of the second rib having a second height (H8) and wherein the first height (H7) is less than the second height (H8).

In a related aspect, the battery pack includes the second rib comprises a transition portion extending from the first portion to the second portion and wherein the transition portion of the second rib transitions from the first height (H7) to the second height (H8).

In a related aspect, the battery pack includes the first column of slots including a third slot and the second column of slots including a third slot, wherein a distance (H17) between a major axis of the third slot of the first column and the major axis of the second slot of the first column is less than the distance (H15) between the major axis of the first slot of the first column and the major axis of the second slot of the first column.

In a related aspect, the battery pack includes a distance (H18) between a major axis of the third slot of the second column and the major axis of the second slot of the first column is greater than the distance (H17) between the major axis of the third slot of the first column and the major axis of the second slot of the first column.

In a related aspect, the battery pack includes the distance H18 being greater than the distance H16.

In a related aspect, the battery pack includes the distance H15 being equal to the distance H18.

In a related aspect, the battery pack includes the distance H16 being equal to the distance H17.

Another example includes a battery pack, comprising a cell holder; at least two pouch battery cells, each pouch battery cell having a first tab and a second tab, the at least two pouch battery cells received in and held by the cell holder; a first tab of a first battery cell aligned with a first tab of a second battery cell along a first axis (X) in a direction generally perpendicular to a length (L) and width (W) of the cells; a second tab of the first cell aligned with a second tab of the second cell along a second axis (Y) in a direction generally perpendicular to the length (L) and the width (W), the first axis (X) and the second axis (Y) being generally parallel; a first distance (H15) between the first tab of the first cell and the first tab of the second cell and a second distance (H16) between the second tab of the first cell and the second tab of the second cell, the first distance (H15) being greater than the second distance (H16).

In a related aspect, the battery pack includes the first tab of the first cell being a negative tab, the second tab of the first cell being a positive tab, the first tab of the second cell being a positive tab and the second tab of the second cell being a negative tab.

In a related aspect, the battery pack includes the distance H18 being greater than H16.

In a related aspect, the battery pack includes the distance H15 being greater than the distance H17.

In a related aspect, the battery pack includes the distance H15 being greater than the distance H16.

In a related aspect, the battery pack includes the distance H16 being equal to the distance H17.

In a related aspect, the battery pack includes the distance H15beings equal to the distance H18.

In a related aspect, the battery pack includes the cell holder including a front wall having an exterior surface and an interior surface and an array of slots extending from the interior surface to the exterior surface and further comprising a circuit board affixed to the exterior surface of the front wall of the cell holder, the circuit board having an array of slots corresponding to and aligned with the array of slots of the cell holder, and a metallic pad associated with each slot of the array of slots.

In a related aspect, the battery pack includes the first tab of the first cell being affixed to a first metallic pad associated with a first slot of the circuit board and the first metallic pad being electrically coupled to a power terminal.

In a related aspect, the battery pack includes the second tab of the first cell and the second tab of the second cell being affixed to a second metallic pad.

Another aspect of the present invention includes a battery pack, comprising a cell holder having a first portion and a second portion, the first portion and the second portion forming an interior cavity, a front wall of the first portion having an array of slots on a front wall extending from an interior surface of the front wall to an exterior surface of the front wall.

In a related aspect, the battery pack includes a plurality of pouch battery cells, each of the battery cells including a positive tab and a negative tab, the positive tab and the negative tab extending through a slot of the array of slots.

In a related aspect, the battery pack is made by a process including inserting a plurality of pouch battery cells into the interior cavity such that a tab of each of the plurality of cells is received in a slot of the array of the slots.

In a related aspect, the battery pack is made by separating a first tab of a first cell from a first tab of a second cell more than a second tab of the first cell from a second tab of the second cell.

Implementations of this aspect may include one or more of the following features.

Advantages may include one or more of the following.

These and other advantages and features will be apparent from the description and the drawings.

## BRIEF DESCRIPTION OF THE DRAWINGS

FIG. 1 is a perspective view of a conventional pouch battery cell prior to sealing a pouch case.

FIG. 2 is a perspective view of the conventional pouch battery cell of FIG. 1 after sealing the pouch case.

FIG. 3 is a perspective view of an exemplary battery pack, according to an embodiment of the invention.

FIG. 4 is another perspective view of the exemplary battery pack of FIG. 1.

FIG. 5 is another perspective view of the exemplary battery pack of FIG. 1.

FIG. 6 is a first side elevation view of the exemplary battery pack of FIG. 1.

FIG. 7 is a second side elevation view of the exemplary battery pack of FIG. 1.

FIG. 8 is a top plan view of the exemplary battery pack of FIG. 1.

FIG. 9A is a first perspective view of a pair of exemplary pouch cells, according to an embodiment of the invention.

FIG. 9B is a second perspective view of the pair of exemplary pouch cells of FIG. 9A.

FIG. 9C is a first side elevation view of the pair of exemplary pouch cells of FIG. 9A.

FIG. 9D is a second side elevation view of the pair of exemplary pouch cells of FIG. 9A.

FIG. 10 is an exploded perspective view of the exemplary battery pack of FIG. 3.

FIG. 11A is a front elevation view of an exemplary core pack of the exemplary battery pack of FIG. 3.

FIG. 11B is a first side elevation view of the exemplary core pack of FIG. 11A.

FIG. 11C is a second side elevation view of the exemplary core pack of FIG. 11A.

FIG. 12A is a section view of the exemplary core pack of FIG. 11A taken along section line A-A.

FIG. 12B is a section view of the exemplary core pack of FIG. 11A taken along section line B-B.

FIG. 13 is an elevation view of a portion of an exemplary cell holder of the core pack of FIG. 11A.

FIG. 14 is a side view of the exemplary cell holder of FIG. 13 with a side wall removed.

FIG. 15A is a cross-section view of a first portion of a first rib of the cell holder of FIG. 13 and FIG. 15B is a cross-section view of a second portion of the first rib of the cell holder of FIG. 13.

FIG. 16A is a cross-section view of a first portion of a second rib of the cell holder of FIG. 13 and FIG. 16B is a cross-section view of a second portion of the second rib of the cell holder of FIG. 13.

FIGs. 17A and 17B are perspective views of the exemplary cell holder of FIG. 14.

FIGs. 18A and 18B are perspective views of the exemplary cell holder of FIG. 14 after a first step of an exemplary manufacturing process of the core pack of FIG. 11A.

FIGs. 19A and 19B are perspective views of the exemplary cell holder of FIG. 14 after a second step of the exemplary manufacturing process of the core pack of FIG. 11A.

FIGs. 20A and 20B are perspective views of the exemplary cell holder of FIG. 14 after a third step of the exemplary manufacturing process of the core pack of FIG. 11A.

FIG. 21A is a first perspective view of two pouch battery cells after being inserted into the cell holder of FIG. 13.

FIG. 21B is a second perspective view of the two pouch battery cells of FIG. 19A.

FIG. 21C is a first side elevation view of the two pouch battery cells of FIG. 19A.

FIG. 21D is a second side elevation view of the two pouch battery cells of FIG. 19A.

FIGs. 22A and 22B are perspective views of the exemplary cell holder of FIG. 14 after a fourth step of the exemplary manufacturing process of the core pack of FIG. 11A.

FIGs. 23A and 23B are perspective views of the exemplary cell holder of FIG. 14 after a fifth step of the exemplary manufacturing process of the core pack of FIG. 11A.

FIGs. 24A and 24B are perspective views of the exemplary cell holder of FIG. 14 after a sixth step of the exemplary manufacturing process of the core pack of FIG. 11A.

FIGs. 25A and 25B are perspective views of the exemplary cell holder of FIG. 14 after a seventh step of the exemplary manufacturing process of the core pack of FIG. 11A.

FIGs. 26A and 26B are perspective views of the exemplary cell holder of FIG. 14 after an eighth step of the exemplary manufacturing process of the core pack of FIG. 11A.

FIG. 27 is an elevation view of an exemplary printed circuit board according to an embodiment of the invention.

FIG. 28A is an elevation view of the printed circuit board mounted on the cell holder of FIG. 14 in a ninth step of the exemplary manufacturing process of the core pack of FIG. 11A.

FIGs. 28B and 28C are perspective views of the exemplary cell holder of FIG. 14 after the ninth step of the exemplary manufacturing process of the core pack of FIG. 11A.

FIGs. 28D and 28E are first side and second side elevation views of the exemplary cell holder of FIG. 14 after the ninth step of the exemplary manufacturing process of the core pack of FIG. 11A.

FIG. 28F is a detail elevation view of FIG. 28D.

FIGs. 29A and 29B are perspective views of the exemplary cell holder of FIG. 14 after a tenth step of the exemplary manufacturing process of the core pack of FIG. 11A.

FIGs. 29C and 29D are first side and second side elevation views of the exemplary cell holder of FIG. 14 after the eleventh step of the exemplary manufacturing process of the core pack of FIG. 11A.

FIGs. 30A and 30B are perspective views of the exemplary cell holder of FIG. 14 after an eleventh step of the exemplary manufacturing process of the core pack of FIG. 11A.

FIGs. 31A - 31K are perspective views of an alternate exemplary manufacturing process of an alternate exemplary cell holder of the core pack of FIG. 11A.

FIG. 32 is a side, section elevation view of an alternate embodiment of a core pack, in accordance with the present disclosure.

## DETAILED DESCRIPTION

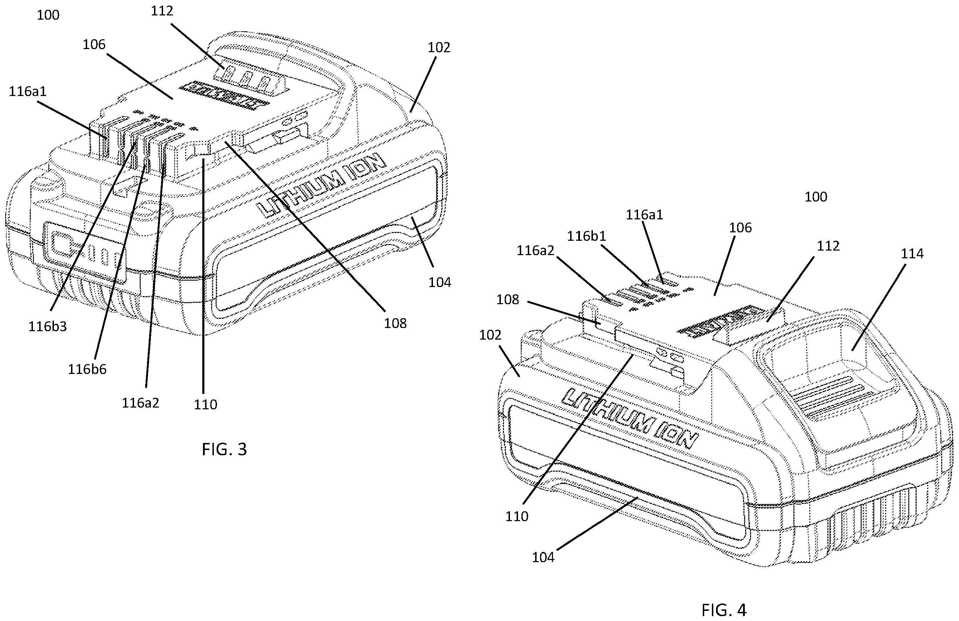

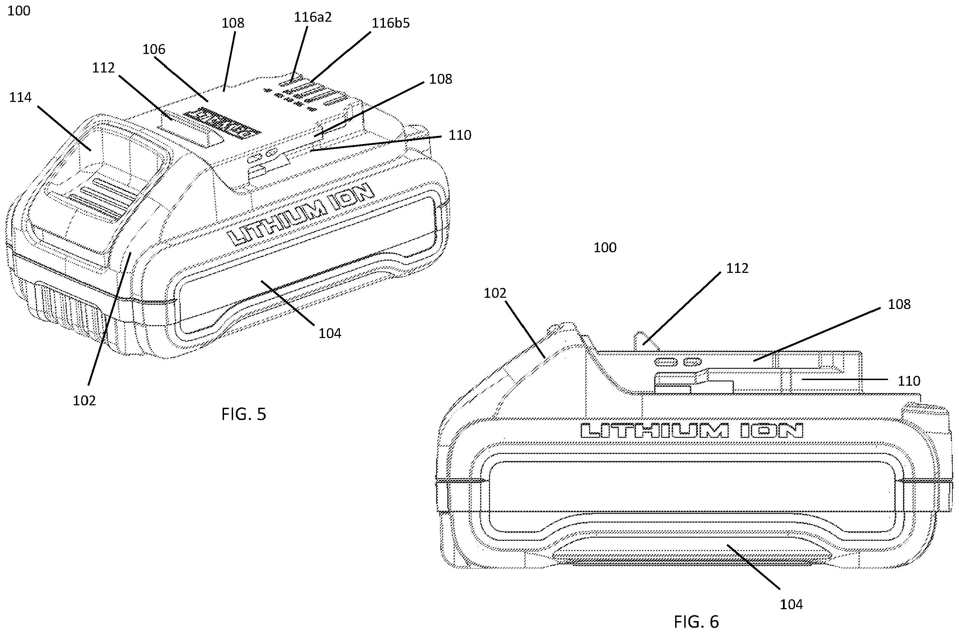

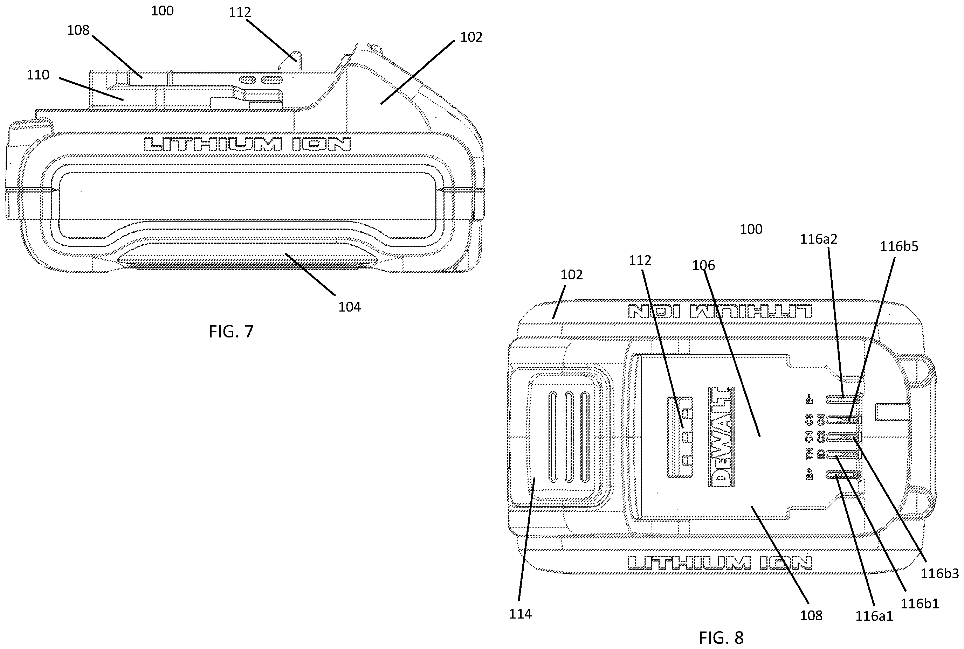

Referring to FIGs. 3-8, there is disclosed an exemplary embodiment of a battery pack 100 according to the present invention. The battery pack 100 includes a housing. As is well known in the art the housing may be constructed of a plastic material. The housing may include an upper portion or housing 102 and lower portion or housing 104. The upper portion 102 and the lower portion 104 may be connected by screws or other fastening means, as is well known in the art. When the upper portion 102 and the lower portion 104 are joined, an interior cavity is formed. The battery pack 100 may include an interface 106 for mechanically and electrically coupling the battery pack 100 to a power tool (not shown) that is to be powered by the battery pack 100. The interface 106 may include a set of rails 108 and a set of grooves 110. In the illustrated example, the battery pack 100 includes a pair of rails 108 (one rail on each side of the battery pack 100) and a pair of grooves 110 (one on each side of the battery pack 100). The grooves 110 receive corresponding rails of the power tool when the battery pack 100 slidingly engages/couples with the power tool.

The interface 106 also includes a latch 112 that is configured to move into and out of the cavity upon depression of a user actuated latch button 114. The latch 112 is configured to be received in a catch of the power tool when the battery pack 100 is fully engaged with/coupled to the power tool. In order to disengage/decouple the battery pack 100 from the power tool, the user actuated latch button 114 is depressed to release the latch 114 from the power tool catch. The battery pack 100 can then be removed from the power tool.

The interface 106 also includes a set of slots 116 in the upper housing 102. The slots 116 provide an opening in the upper housing 102 for terminals of the power tool to mate with terminals of the battery pack 100. These battery pack terminals are discussed in more detail below. The set of slots 116 includes a first subset of slots 116a which provide access to power terminals of the battery pack 100 and a second subset of slots 116b which provide access to sense (or signal) terminals of the battery pack 100. The first subset of slots 116a may include a first slot 116a1 for access to a positive battery pack power terminal and a second slot 116a2 for access to a negative battery pack power terminal. The second subset of slots 116b may include six slots 116b1, 116b2, 116b3, 116b4, 116b5, 116b6 for access to battery pack sense terminals including a thermistor (TH) terminal, an identification (ID), a first intercell terminal (C1), a second intercell terminal (C2), a third intercell terminal (C3) and a fourth intercell terminal (C4), respectively - discussed in more detail below.

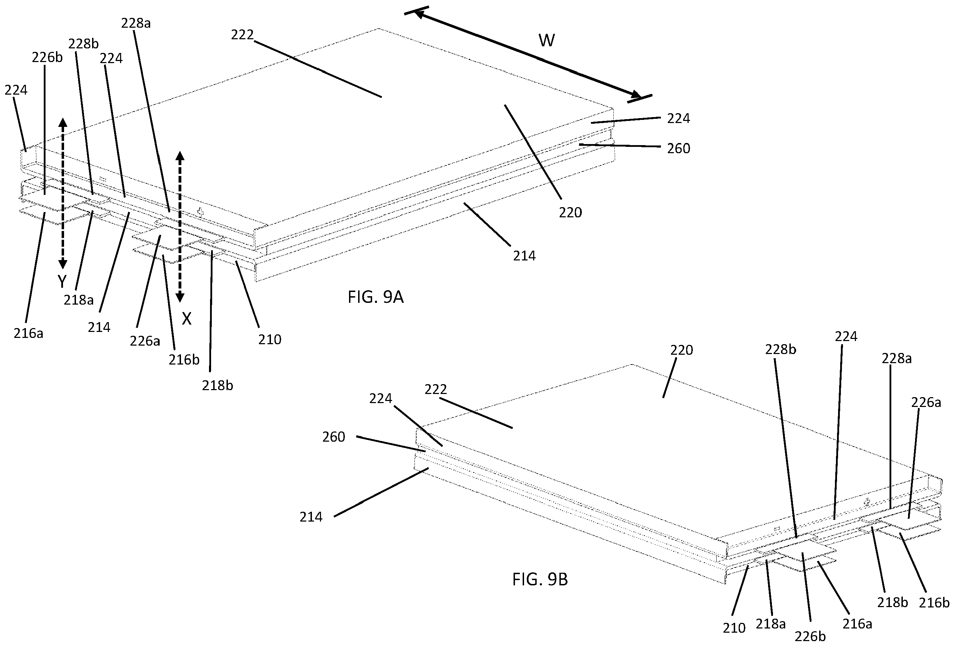

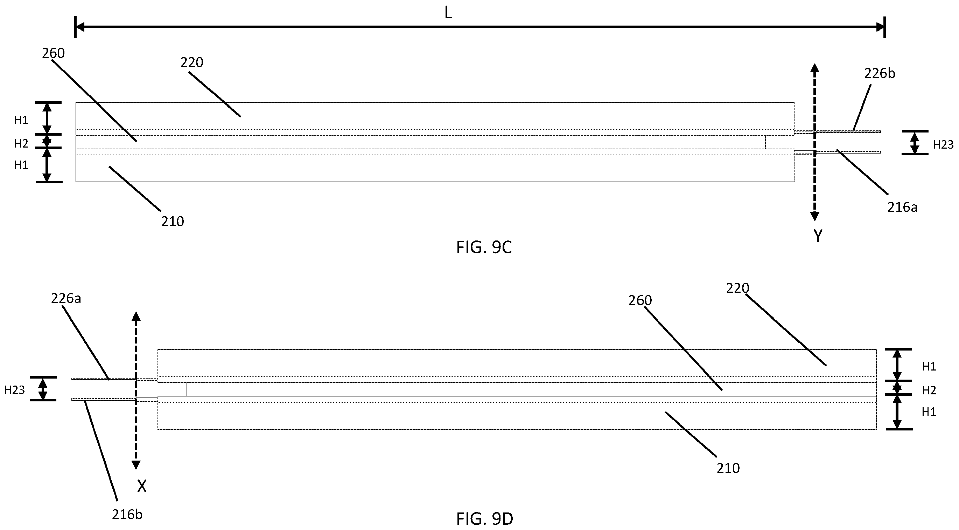

Referring to FIGs. 9A, 9B, 9C, and 9D, there is illustrated a pair of exemplary pouch cells 210, 220. The illustrated pouch cells 210, 220 may be referred to as single cup pouch cells. The pouch cells 210, 220 are shown in a back-to-back or opposed to each other. The first pouch cell 210 may include a first pouch case (not shown). Similarly, the second pouch cell 220 may include a second pouch case 222. The first pouch case may include a first heat seal 214 along three sides of the first pouch case. Similarly, the second pouch case 222 may include a second heat seal 224 along three sides of the second pouch case 222. The first pouch cell 210 may include a first (positive) cell tab 216a and a second (negative) cell tab 216b. The second pouch cell 210 may similarly include a first (positive) cell tab 226a and a second (negative) cell tab 226b. The first pouch cell 210 may include a secondary heat seal 218a about the first cell tab 216a between the first cell tab 216a and the heat seal 214 and a secondary heat seal 218b about the second cell tab 216b between the second cell tab 216a and the heat seal 214. Similarly, the second pouch cell 220 may include a secondary heat seal 228a about the first cell tab 226a between the first cell tab 226a and the heat seal 224 and a secondary heat seal 228b about the second cell tab 226b between the second cell tab 226a and the heat seal 224.

An insulating material 260 may be positioned between the first pouch cell 210 and the second pouch cell 220. The insulating material 260 may provide thermal insulation between the first pouch cell 210 and the second pouch cell 220. The insulating material 260 may also have compression properties to allow the first pouch cell 210 and the second pouch cell 220 to expand during charge and/or discharge of the cells. The insulating material 260, may be, for example, a polyurethane or silicone foam of the closed or open cell variety, or a ceramic textile.

As illustrated in FIGs. 9A, 9B, 9C and 9D, when the pouch cells 210, 220 are arranged back-to-back, the positive tab 216a of the first pouch cell 210 is aligned with the negative tab 226b of the second pouch cell 220 in a direction perpendicular to the length and width of the cells and the negative tab 216b of the first pouch cell 210 is aligned with the positive tab 226a of the second pouch cell 220 in a direction perpendicular to the length and width of the cell.

In the context of the present disclosure, the tabs of the same cell are considered aligned in a row (and are adjacent to each other) and the tabs of different cells that are aligned are in a column. Furthermore, the tabs of adjacent cells that are aligned in a column are denoted as adjacent tabs. In other words, the positive tab 216a of the first pouch cell 210 is adjacent to the negative tab 216b of the first pouch cell 210 in a first direction, and the positive tab 226a of the second pouch cell 220 is adjacent to the negative tab 226b of the second pouch cell 220 in the first direction, and the positive tab 216a of the first pouch cell 210 is adjacent to the negative tab 226b of the second pouch cell 220 in a second direction (generally perpendicular to the first direction) and the negative tab 216b of the first pouch cell 210 is adjacent to the positive tab of the second pouch cell 220 in the second direction. The positive tab 216a of the first pouch cell 210 is not considered adjacent to the positive tab 226a of the second pouch cell 220 and the negative tab 216b of the first pouch cell 210 is not considered adjacent to the negative tab 226b of the second pouch cell 220.

As illustrated in FIGs. 9C and 9D, there is a distance (height) H23 between centerlines of adjacent tabs 216a, 226b and adjacent tabs 216b, 226a before they are placed in a cell holder (as described below).

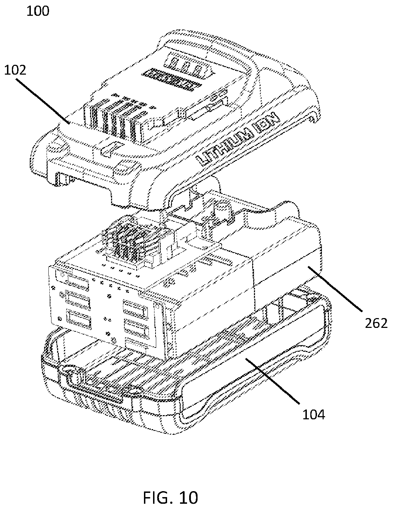

Referring to FIG. 10, there is illustrated an exploded view of an exemplary battery pack 100 according to the present invention. The battery pack 100 includes a core pack 262 (described in more detail below). The core pack 262 resides in the cavity created by the joining of the upper housing 102 and the lower housing 104.

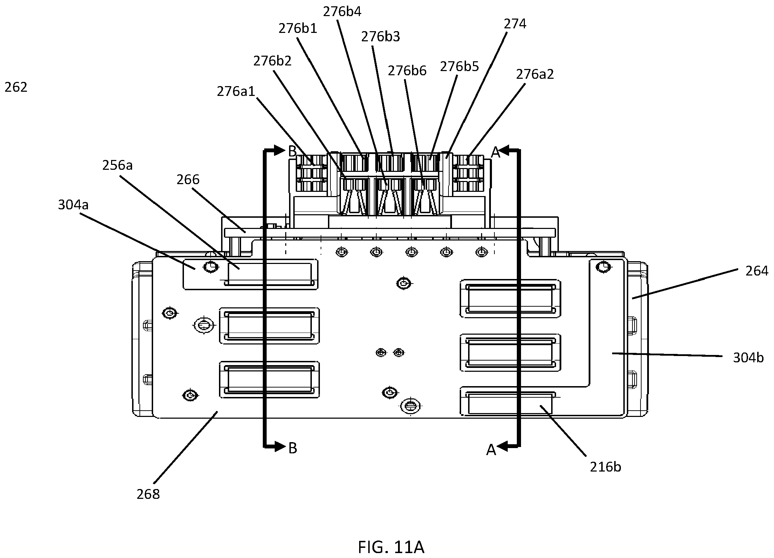

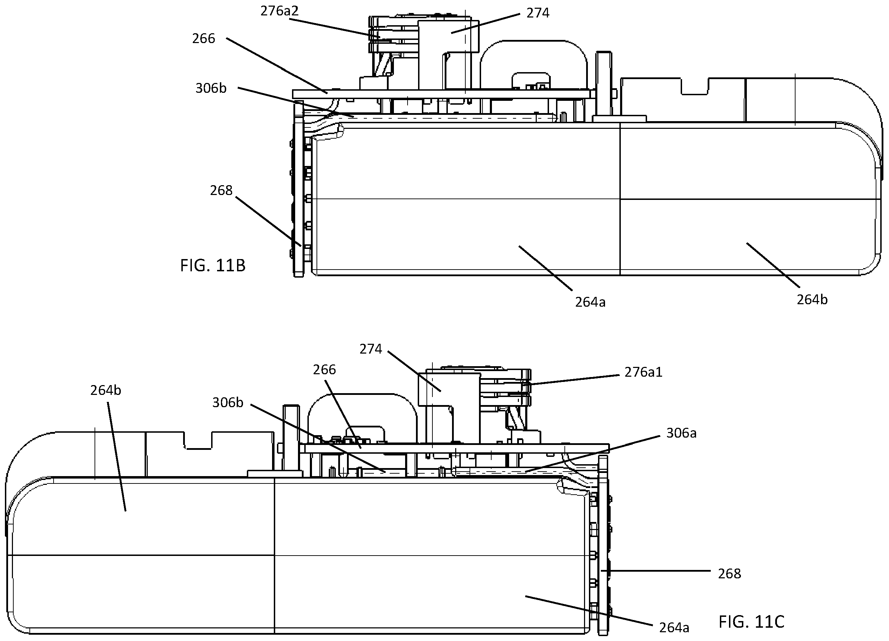

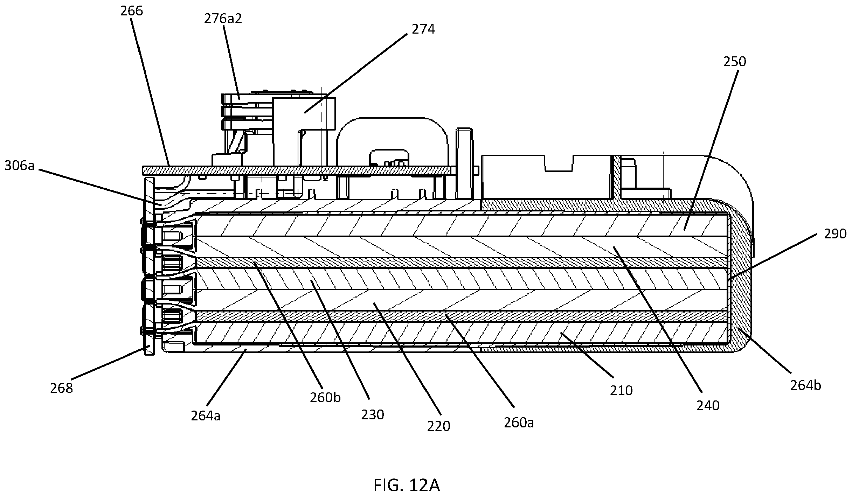

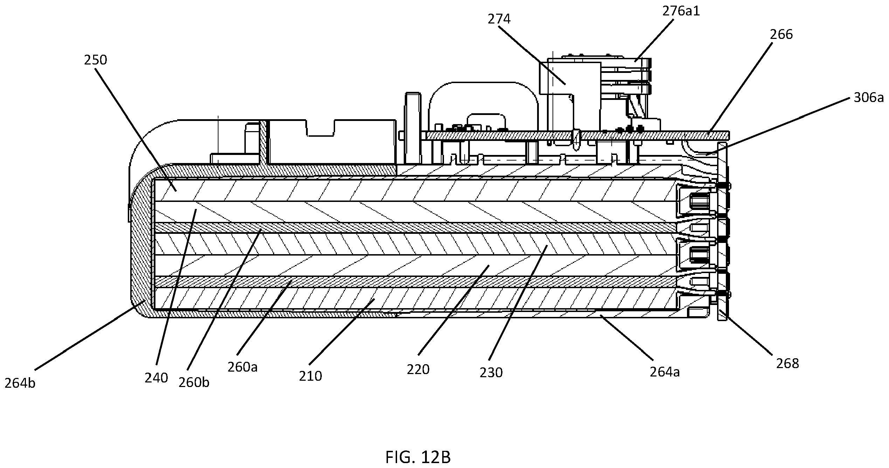

Referring to FIGs. 11A, 11B, 11C, 12A, and 12B, there is illustrated an exemplary core pack 262, in accordance with the present disclosure. FIG. 11A illustrates a front elevation view of the core pack 262. FIG. 11B illustrates a first side elevation view of the core pack 262. FIG. 11C illustrates a second side elevation view of the core pack 262. FIG. 12A illustrates a first section view of the core pack 262 taken along section line A-A of FIG. 11A and FIG. 12B illustrates a second section view of the core pack 262 taken along section line B-B of FIG. 11A.

The core pack 262 may include a cell holder 264. The cell holder 264 may include a first, front or forward portion (or housing) 264a and a second, rear or rearward portion (or housing) 264b. The core pack 262 may include a first or primary printed circuit board (PCB) 266 and a second or secondary PCB 268. In alternate embodiments, the printed circuit boards may be replaced by other types of circuits, including but not limited to flexible printed circuits. The core pack 262 may include a terminal block 274. The terminal block 274 may be mounted to the primary PCB 266. The terminal block 274 may hold a set of battery pack terminals 276 in a fixed relation to each other. The set of battery pack terminals 276 may include a (first) subset of power terminals 276a and a (second) subset of sense (or signal) terminals 276b. The subset of power terminals 276a may include a (first) positive power terminal 276a1 and a (second) negative power terminal 276a2. The subset of sense terminals 276b may include a thermistor terminal (TH) 276b1, an identification terminal (ID) 276b1, a first intercell terminal (C1) 276b3, a second intercell terminal (C2) 276b4, a third intercell terminal (C3) 276b5, and a fourth intercell terminal (C4) 276b6.

The primary PCB 266 may include other components mounted thereto or incorporated therein.

The core pack 262 may also include a set of pouch battery cells 200. In the illustrated embodiment, the core pack 262 includes a set of five pouch battery cells 210, 220, 230, 240, 250 and two insulating layers 260a and 260b. Each battery cell of the set of battery cells 200 are as described above. Alternate embodiments of the core pack 262 may include more or fewer pouch battery cells, depending upon the requirements of the battery pack or an associated tool platform. The features and advantages of the instant disclosure are not limited by the number of battery cells in the core pack. In addition, the battery cells may be of a double cup configuration instead of the single cup configuration illustrated in the figures.

In the illustrated, exemplary embodiment, the cell holder 264 may include a first, front (or forward) portion (or housing) 264a and a second, rear (or rearward) portion (or housing) 264b. The first portion and the second portion mate to form the cell holder housing at a mating (parting) line. The cell holder 264 may have a generally rectangular box shape having six walls. The cell holder 264 may include a front (forward) wall, a rear (rearward) wall, a top wall, a bottom wall, a first side wall and a second side wall. Each wall may include an outer surface and an inner surface. The inner surface of the walls forms a cavity of the cell holder. The cell holder housing may have other generally similar shapes and still fall within the scope of the present invention.

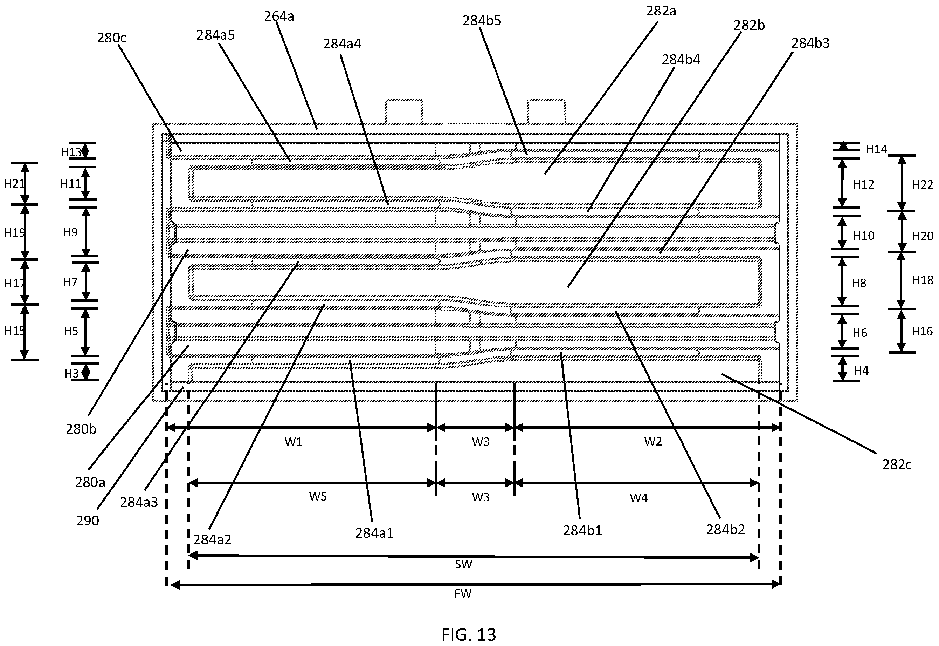

As illustrated in FIGs. 13 - 18B, an exemplary embodiment of the cell holder 264 may include an array/system of ribs extending from the inner surface of the front wall into the cell holder cavity. The ribs may be formed integrally with the cell holder front wall (in other words formed when the cell holder front portion is created) or the ribs may be discrete elements that are attached to the front wall.

The exemplary array of ribs may include a first set (system) of ribs 280 of a first type and a second set (system) of ribs 282 of a second type. The ribs of the first set of ribs 280 are interposed with the ribs of the second set of ribs 282 in an alternating fashion. As illustrated in FIGs. 13, 14, 15A, and 15B, the cell holder 264 includes a first rib 280a, a second rib 280b, and a third rib 280c of the first set of ribs 280 (the third rib 280c being a ½ rib) and a first rib 282a, a second rib 282b, and a third rib 282c of the second set of ribs 282 (the third rib 282c being a ½ rib). The first set first rib 280a is positioned between the second set third rib 282c and the second set second rib 282b, the first set second rib 280a is positioned between the second set second rib 282b and the second set first rib 282b. The second set first rib 282a is positioned between the first set second rib 280b and the first set third rib 280c and the second set second rib 282b is positioned between the first set first rib 280a and the first set second rib 280b.

The first set of ribs 280 have a width (FW). For a portion (W1) of the width FW, the first rib 280a of the first set of ribs 280 has a height (H5), the second rib 280b of the first set of ribs 280 has a height (H9), and the third rib 280c of the first set of ribs 280 has a height (H13). The height H5 may be equal to the height H9 and two times the height H13. For a portion (W2) of the width FW, the first rib 280a of the first set of ribs 280 has a height (H6), the second rib 280b of the first set of ribs 280 has a height (H10), and the third rib 280c has a height (H14). The height H6 may be equal to the height H10 and two times the height H14. The heights H5, H9, H13 are greater than the heights H6, H10, H14, respectively. For a portion (W3) of the width FW, the first set of ribs 280 transition from the heights H5, H9, H13 to the heights H6, H10, H14, respectively.

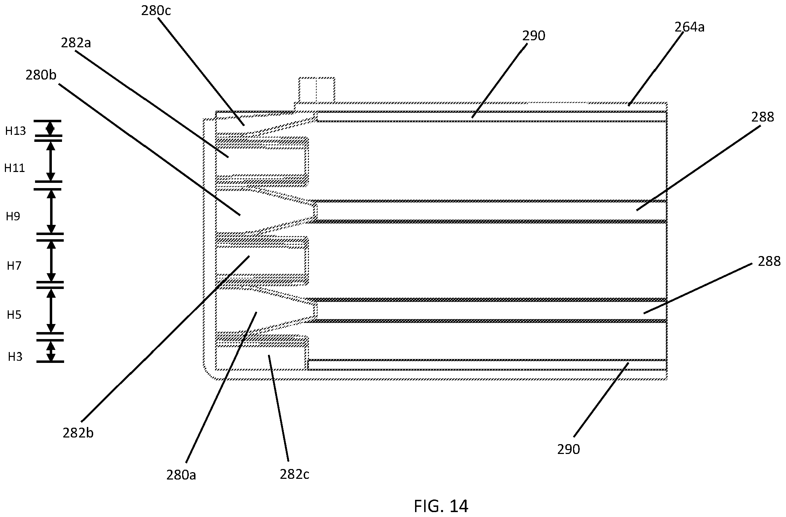

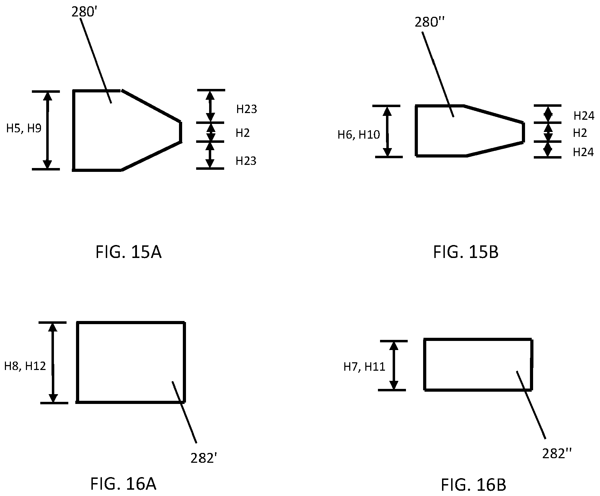

As illustrated in FIGs. 14, 15A, and 15B, the first set of ribs 280 have a tapered cross-section. FIG. 15A illustrates a cross-section view of the portion 280' of ribs 280a, 280b, along the width W1. FIG. 15B illustrates a cross-section view of the portion 280" of ribs 280a, 280b along the width W2. As illustrated, the ribs 280a, 280b have a height H5, H9 along the width W1. Each rib 280a, 280b along the width W1 includes a first tapered section and a second tapered section. The first and second tapered sections extend into the cell holder cavity to a rearward facing surface. The rearward facing surface has a height H2. This height H2 is the same as the foam element 260 between cells 210 and 220 and the foam element 260 between cells 230 and 240. The first and second tapered sections/walls have a height H23. As illustrated, the ribs 280a, 280b have a height H6, H10 along the width W2. Each rib 280a, 280b along the width W2 includes a third tapered section and a fourth tapered section. The third and fourth tapered sections extend into the cell holder cavity to a rearward facing surface. The rearward facing surface has a height H2. This height H2 is the same as the foam element 260 between cells 210 and 220 and the foam element 260 between cells 230 and 240. The third and fourth tapered sections/walls have a height H24.

The second set of ribs 282 have a width (SW). For a portion (W4) of the width SW, the first rib 282a of the second set of ribs 282 has a height (H12), the second rib 282b of the second set of ribs 282 has a height (H8), and the third rib 282c of the second set of ribs 282 has a height (H4). The height H12 may be equal to the height H8 and two times the height H4. For a portion (W5) of the width SW, the first rib 282a of the second set of ribs 282 has a height (H11), the second rib 282b of the second set of ribs 28 has a height (H7), and the third rib 282c of the second set of ribs 282 has a height (H3). The height H11 may be equal to the height H7 and two times the height H3. The heights H12, H8, H4 are greater than the heights H11, H7, H3, respectively. For the portion W3 of the width SW, the second set of ribs 282 transition from the heights H12, H8, H4 to the heights H11, H7, H3, respectively.

As illustrated in FIGs. 14, 16A, and 16B, the second set of ribs 282 have a rectangular cross-section. FIG. 16A illustrates a cross-section view of the portion 282' of ribs 282a, 282b, along the width W4. FIG. 16B illustrates a cross-section view of the portion 282" of ribs 282a, 282b along the width W5. As illustrated, the ribs 282a, 282b have a height H12, H8 along the width W4. As illustrated, the ribs 282a, 282b have a height H11, H7 along the width W5.

The forward wall also includes an array of slots 284. Each slot extends from the internal surface of the forward wall to an external surface of the forward wall. Each slot of the array of slots 284 are sized and configured to receive a tab of one of the battery cells of the set of battery cells 200 upon inserting one of the battery cells of the set of battery cells 200 into the cell holder 264. The array of slots 284 includes a first column of slots 284a and a second column of slots 284b.

As illustrated in FIG. 13., the first column of slots 284a of the array of slots 284 includes a first slot 284a1 between the second portion of the third rib 282c of the second set of ribs 282 and the first portion of the first rib 280a of the first set of ribs 280, a second slot 284a2 between the first portion of the first rib 280a of the first set of ribs 280 and the second portion of the second rib 282b of the second set of ribs 282, a third slot 284a3 between the second portion of the second rib 282b of the second set of ribs 282 and the first portion of the second rib 280b of the first set of ribs 280, a fourth slot 284a4 between the first portion of the second rib 280c of the first set of ribs 280 and the second portion of the first rib 282a of the second set of ribs 282, and a fifth slot 284a5 between the second portion of the first rib 282a of the first set of ribs 282 and the first portion of the third rib 280c of the first set of ribs 280.

As illustrated in FIG. 13, the second column of slots 284b of the array of slots 284 includes a first slot 284b1 between the first portion of the third rib 282c of the second set of ribs 282 and the second portion of the first rib 280a of the first set of ribs 280, a second slot 284b2 between the second portion of the first rib 280a of the first set of ribs 280 and the first portion of the second rib 282b of the second set of ribs 282, a third slot 284b3 between the first portion of the second rib 282b of the second set of ribs 282 and the second portion of the second rib 280b of the first set of ribs 280, a fourth slot 284b4 between the second portion of the second rib 280c of the first set of ribs 280 and the first portion of the first rib 282a of the second set of ribs 282, and a fifth slot 284b5 between the first portion of the first rib 282a of the first set of ribs 282 and the second portion of the third rib 280c of the first set of ribs 280.

The slots of the first column of slots 284a are aligned vertically. A distance (H15) separates a major axis of the first slot 284a1 of the first column of slots 284a and a major axis of the second slot 284a2 of the first column of slots 284a. A distance (H17) separates the major axis of the second slot 284a2 of the first column of slots 284a and a major axis of the third slot 284a3 of the first column of slots 284a. A distance (H19) separates the major axis of the third slot 284a3 and a major axis of the fourth slot 284a4 of the first column of slots 284a. A distance (H21) separates the major axis of the fourth slot 284a4 of the first column of slots 284a and a major axis of the fifth slot 284a5 of the first column of slots 284a. The distance H15 may be equal to the distance H19. The distance H17 may be equal to the distance H21. The distances H15 and H19 may be greater than the distances H17 and H21.

The slots of the second column of slots 284b are also aligned vertically. A distance (H16) separates a major axis of the first slot 284b1 of the second column of slots 284b and a major axis of the second slot 284b2 of the second column of slots 284b. A distance (H18) separates the major axis of the second slot 284b2 of the second column of slots 284b and a major axis of the third slot 284b3 of the second column of slots 284b. A distance (H20) separates the major axis of the third slot 284b3 and a major axis of the fourth slot 284b4 of the second column of slots 284b. A distance (H22) separates the major axis of the fourth slot 284b4 of the second column of slots 284b and a major axis of the fifth slot 284b5 of the second column of slots 284b. The distance H16 may be equal to the distance H20. The distance H18 may be equal to the distance H22. The distances H18 and H22 may be greater than the distances H16 and H20.

The first column of slots 284a is generally parallel to the second column of slots 284b.

The distance H15 may be greater than the distance H6. The distance H19 may be greater than the distance H20. The distance H18 may be greater than the distance H17. The distance H22 may be greater than the distance H21. The distance H15 may be greater than the distance H17 and the distance H19 may be greater than the distance H21. The distance H18 may be greater than the distance H16 and the distance H22 may be greater than the distance H20.

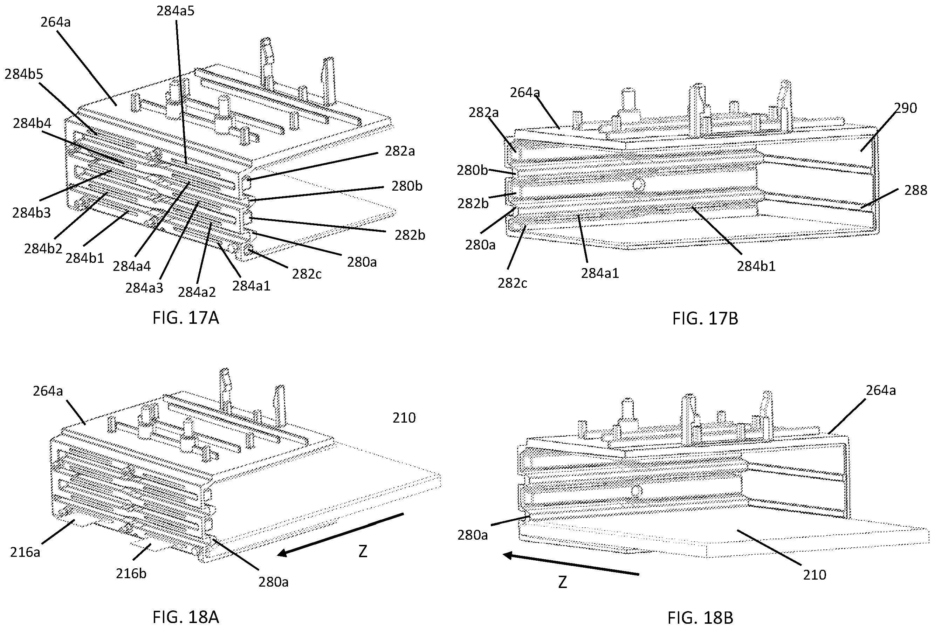

FIGs. 17 - 30 illustrate an assembly process of the corepack 262. The first side wall of the front housing 264a and the rear housing 264b of the cell holder 264 has been removed from these figures to better illustrate the assembly process. A second side wall 290 of the front housing 264a including side ribs (or channels) 288 is shown in these figures.

As illustrated in FIGs. 17A and 17B, the assembly process begins with providing a front portion or front housing 264a of the cell holder 264. As shown, the front portion 264a includes the array of ribs including the first set of ribs 280 and the second set of ribs 282. The front wall of the front housing 264a also includes the array of slots including the first column of slots 284a and the second column of slots 284b.

As illustrated in FIGs. 18A and 18B, a first pouch battery cell 210 is inserted or slid into the front housing 264a in a direction Z generally parallel to the bottom wall of the front housing 264a and generally perpendicular to the front wall of the front housing 264a. The first tab (the negative tab in this embodiment) 216b of the first battery cell 210 is forced the distance H23 towards the bottom wall of the front housing 264a by the lower taper section of the first portion of the first rib 280a of the first set of ribs 280 and controlled by the second portion of the third rib 282c of the second set of ribs 282 and received in the first slot 284a1 of the first column of slots 284a. Simultaneously, the second tab (the positive tab in this embodiment) 216a of the first battery cell 210 is forced the distance H24 (slightly less than the first tab 216b) towards the bottom wall of the front housing 264a by the lower taper of the second portion of the first rib 280a of the first set of ribs 280 and controlled by the first portion of the third rib 282c of the second set of ribs 282 and received in the first slot 284b1 of the second column of slots 284b. As such, the tabs 216a and 216b of the first battery cell 210 are offset from each in a direction generally perpendicular to the top and bottom walls of the cell holder 264.

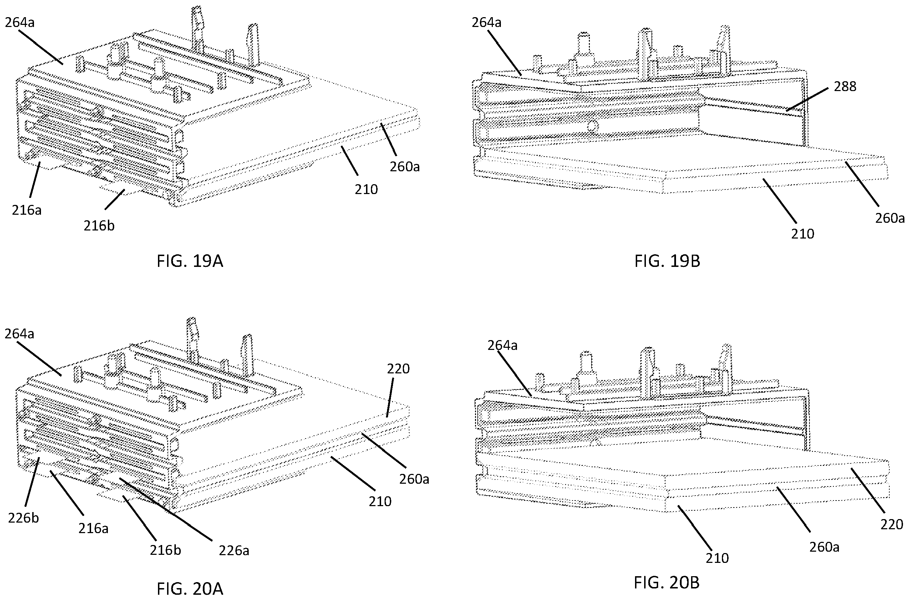

As illustrated in FIGs. 19A and 19B, a first insulating layer 260a is inserted or slid into the front housing 264a in the direction Z in engagement with slots or channels 288. The insulating layer 260a sits against the back of the first battery cell 210. The insulating layer 260a abuts the rear face/wall of the first rib 280a of the first set of ribs 280. The insulating layer 260a has a height (H2) generally equal to the height (H2) of the rear wall of the first rib 280a of the first set of ribs 280.

As illustrated in FIGs. 20A and 20B, a second pouch battery cell 220 is inserted or slid into the front housing 264a in the direction Z. The first tab (the positive tab in this embodiment) 226a of the second battery cell 220 is forced the distance H23 towards the top wall of the front housing 264a by the upper taper section of the first portion of the first rib 280a of the first set of ribs 280 and controlled by the second portion of the second rib 282b of the second set of ribs 282 and received in the second slot 284a2 of the first column of slots 284a. Simultaneously, the second tab (the negative tab in this embodiment) 226b of the second battery cell 220 is forced the distance H24 (slightly less than the first tab 226a) towards the top wall of the front housing 264a by the upper taper of the second portion of the first rib 280a of the first set of ribs 280 and controlled by the first portion of the second rib 282b of the second set of ribs 282 and received in the second slot 284b2 of the second column of slots 284b. As such, the tabs 226a and 226b of the second battery cell 220 are offset from each in the direction generally perpendicular to the top and bottom walls of the cell holder 264.

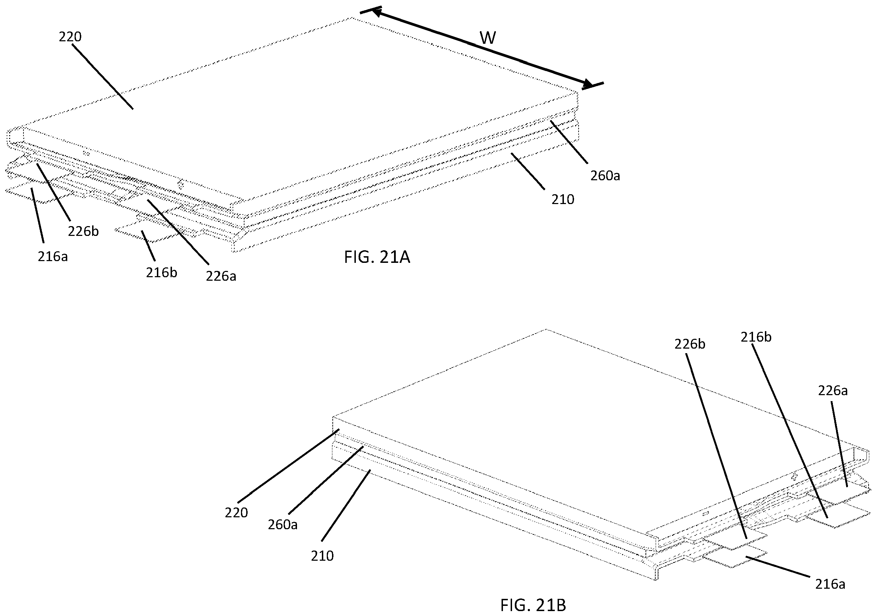

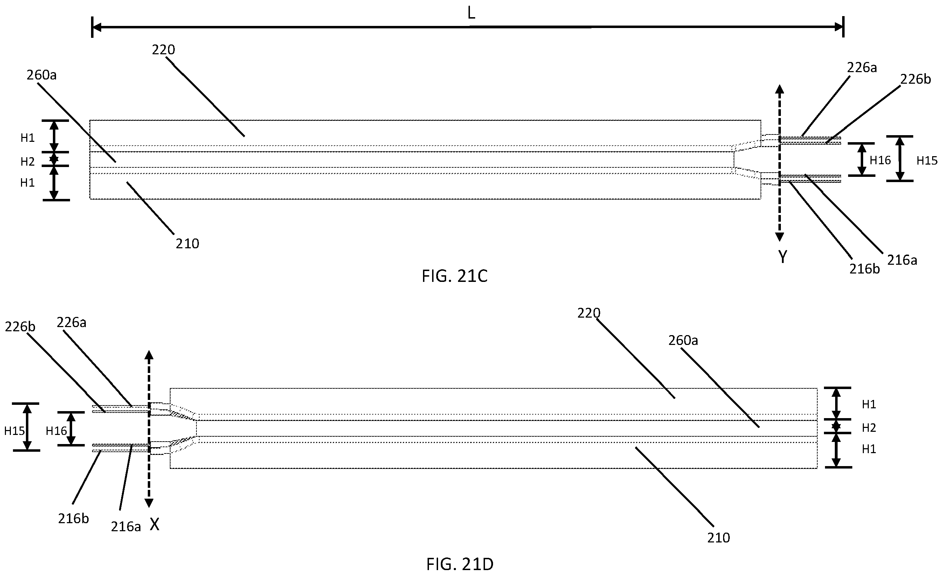

FIGs. 21, 21B, 21C, and 21D illustrate battery cells 210 and 220 and the insulating layer 260a as they are positioned in the cell holder 264 with the cell holder 264 removed. In other words, the cell tabs 216a, 216b, 226a, and 226b are shown as they are affected by the cell holder 264. More particularly, the cell tabs 216a and 226b are shown separated by the distance H16 and the cell tabs 216b and 226a are shown separated by the distance H15. As illustrated in FIGs. 21A, 21B, 21C and 21D, the first tab 216b of the first battery cell 210 and the first tab 226a of the second battery cell 220 are aligned along the axis X and the second tab 216a of the first battery cell 210 and the second tab 226b of the second battery cell 220 are aligned along the axis Y.

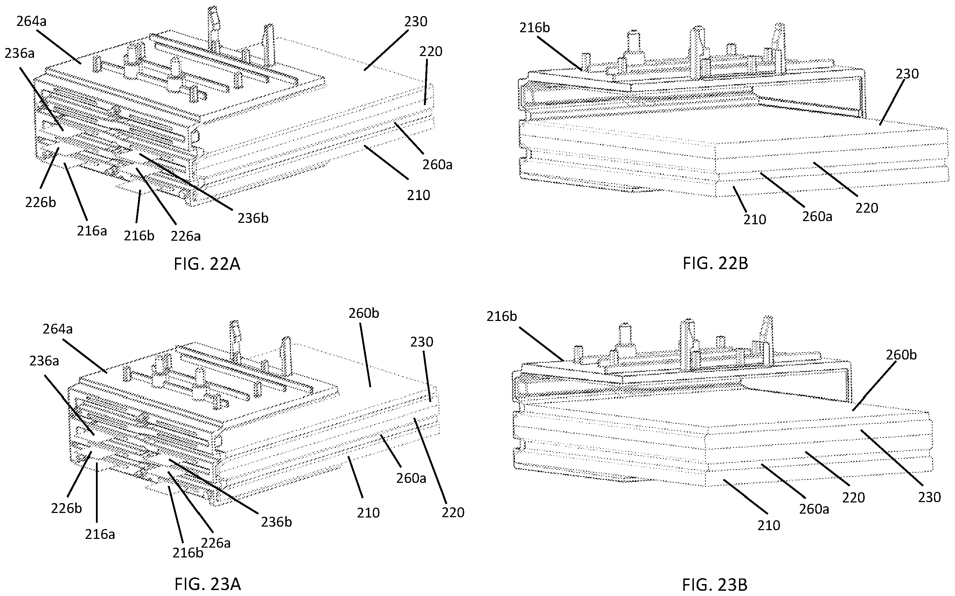

As illustrated in FIGs. 22A and 22B, a third pouch battery cell 230 is inserted or slid into the front housing 264a in the direction Z. The first tab (the negative tab in this embodiment) 236b of the third battery cell 230 is forced the distance H23 towards the bottom wall of the front housing 264a by the lower taper section of the first portion of the second rib 280b of the first set of ribs 280 and controlled by the second portion of the second rib 282b of the second set of ribs 282 and received in the third slot 284a3 of the first column of slots 284a. Simultaneously, the second tab (the positive tab in this embodiment) 236a of the third battery cell 230 is forced the distance H24 (slightly less than the first tab 236b) towards the bottom wall of the front housing 264a by the lower taper of the second portion of the second rib 280b of the first set of ribs 280 and controlled by the first portion of the second rib 282b of the second set of ribs 282 and received in the third slot 284b3 of the second column of slots 284b. As such, the tabs 236a and 236b of the third battery cell 230 are offset from each in a direction generally perpendicular to the top and bottom walls of the cell holder 264.

The first tab 236b of the third battery cell 230 is aligned with the first tab 226a of the second battery cell 220 and the first tab 216b of the first battery cell 210 along the axis X and the second tab 236a of the third battery cell 230 is aligned with the second tab 226b of the second battery cell 220 and the second tab 216a of the first battery cell 210 along the axis Y.

As illustrated in FIGs. 23A and 23B, a second insulating layer 260b is inserted or slid into the front housing 264a in the direction Z. The insulating layer 260b sits against the face of the third battery cell 230. The insulating layer 260b abuts the rear face/wall of the second rib 280b of the first set of ribs 280. The insulating layer 260b has a height (H2) generally equal to the height (H2) of the rear wall of the second rib 280b of the first set of ribs 280.

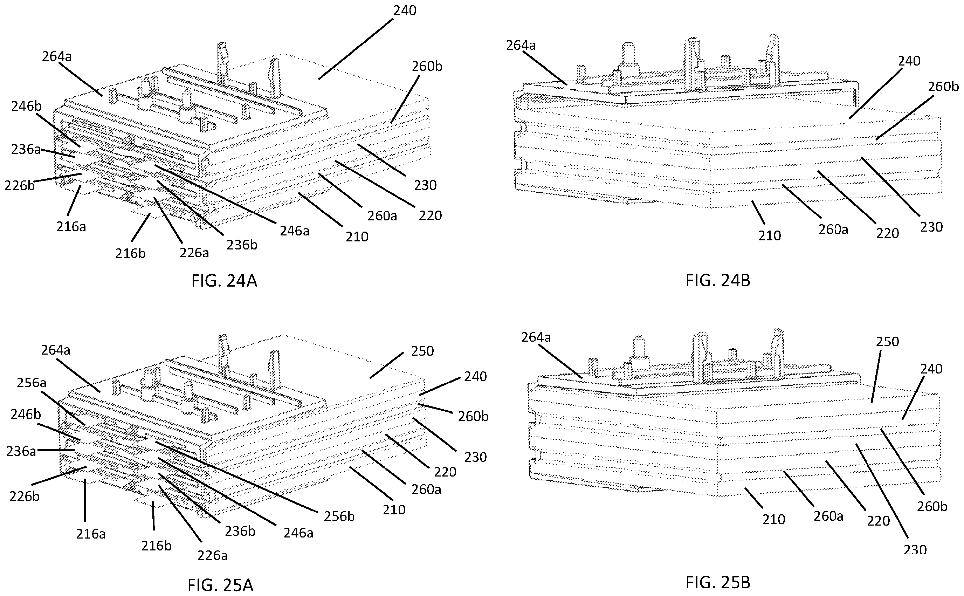

As illustrated in FIGs. 24A and 24B, a fourth pouch battery cell 240 is inserted or slid into the front housing 264a in the direction Z. The first tab (the positive tab in this embodiment) 246a of the fourth battery cell 240 is forced the distance H23 towards the top wall of the front housing 264a by the upper taper section of the first portion of the second rib 280b of the first set of ribs 280 and controlled by the second portion of the first rib 282a of the second set of ribs 282 and received in the fourth slot 284a4 of the first column of slots 284a. Simultaneously, the second tab (the negative tab in this embodiment) 246b of the fourth battery cell 240 is forced the distance H24 (slightly less than the first tab 246a) towards the top wall of the front housing 264a by the upper taper of the second portion of the third rib 280a of the first set of ribs 280 and controlled by the first portion of the first rib 282a of the second set of ribs 282 and received in the fourth slot 284b4 of the second column of slots 284b. As such, the tabs 246a and 246b of the fourth battery cell 240 are offset from each in the direction generally perpendicular to the top and bottom walls of the cell holder 264.

The first tab 246a of the fourth battery cell 240 is aligned with the first tab 236b of the third battery cell 230, the first tab 226a of the second battery cell and the first tab 216b of the first battery cell 210 along the axis X and the second tab 246b of the fourth battery cell 240 is aligned with the second tab 236a of the third battery cell 230, the second tab 226b of the second battery cell 220 and the second tab 216a of the first battery cell 210 along the axis Y.

As illustrated in FIGs. 25A and 25B, a fifth pouch battery cell 250 is inserted or slid into the front housing 264a in the direction Z. The first tab (the negative tab in this embodiment) 256b of the fifth battery cell 250 is forced the distance H23 towards the bottom wall of the front housing 264a by the lower taper section of the first portion of the third rib 280c of the first set of ribs 280 and controlled by the second portion of the first rib 282a of the second set of ribs 282 and received in the fifth slot 284a5 of the first column of slots 284a. Simultaneously, the second tab (the positive tab in this embodiment) 256a of the third battery cell 250 is forced the distance H24 (slightly less than the first tab 256b) towards the bottom wall of the front housing 264a by the lower taper of the second portion of the third rib 280c of the first set of ribs 280 and controlled by the first portion of the first rib 282a of the second set of ribs 282 and received in the fifth slot 284b5 of the second column of slots 284b. As such, the tabs 256a and 256b of the fifth battery cell 250 are offset from each in a direction generally perpendicular to the top and bottom walls of the cell holder 264.

The first tab 256b of the fifth battery cell 250 is aligned with the first tab 246a of the fourth battery cell 240, the first tab 236b of the third battery cell 230, the first tab 226a of the second battery cell 220 and the first tab 216b of the first battery cell 210 along the axis X and the second tab 256a of the fifth battery cell 250 is aligned with the second tab 246b of the fourth battery cell 240, the second tab 236a of the third battery cell 230, the second tab 226b of the second battery cell 220 and the second tab 216a of the first battery cell 210 along the axis Y.

The front portion 264a of the cell holder 264 is now full. In alternate embodiments, the set of battery cells 200 and the insulating layers 260 may be stacked prior to being inserted into the front portion of the cell holder and then inserted as stack or cartridge.

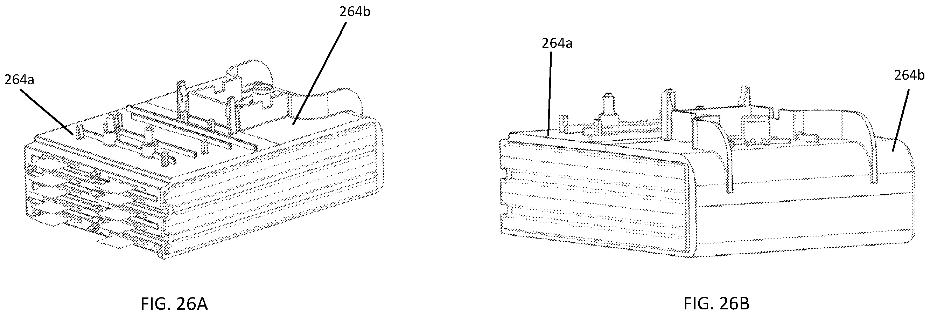

As illustrated in FIGs. 26a and 26b, the rear portion 264b is then placed over the rear ends of the battery cells of the set of battery cells 200 and the insulating portions 260 and coupled to the front portion 264a of the cell holder 264.

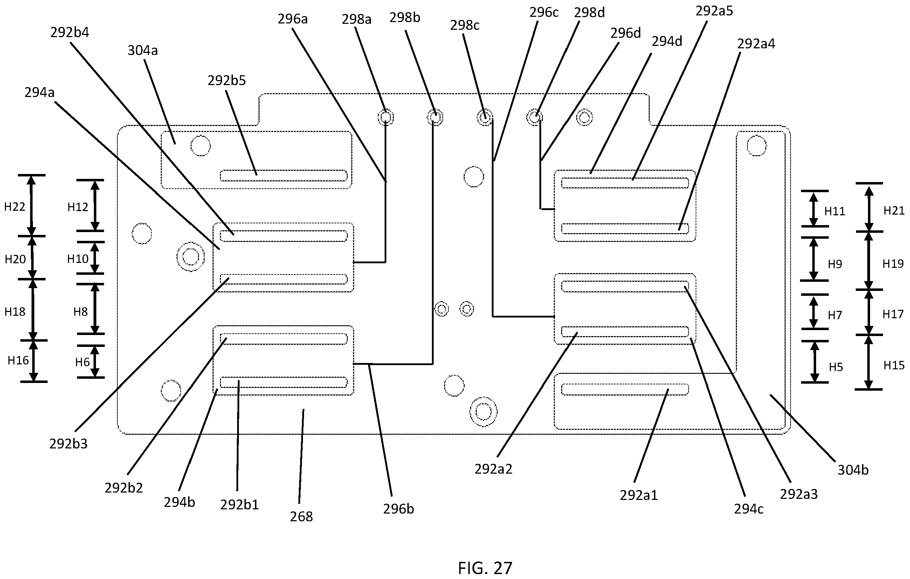

FIG. 27 illustrates an exemplary embodiment of a secondary printed circuit board (PCB) 268 of the core pack 262. The secondary PCB 268 includes a front surface and a rear surface.

The PCB 268 includes a first column of slots 292a. The slots 292a1, 292a2, 292a3, 292a4, 292a5 of the first column of slots 292a extend from the rear surface of the PCB 268 to the front surface of the PCB 268. A distance H5 separates the first slot 292a1 and the second slot 292a2 of the first column of slots 292a. A distance H7 separates the second slot 292a2 and the third slot 292a3 of the first column of slots 292a. A distance H9 separates the third slot 292a3 and the fourth slot 292a4 of the first column of slots 292a. A distance H11 separates the fourth slot 292a4 and the fifth slot 292a5 of the first column of slots 292a.

A distance H15 separates a major axis of the first slot 292a1 and a major axis of the second slot 292a2 of the first column of slots 292a. A distance H17 separates the major axis of the second slot 292a2 and a major axis of the third slot 292a3 of the first column of slots 292a. A distance H19 separates the major axis of the third slot 292a2 and a major axis of the fourth slot 292a4 of the first column of slots 292a. A distance H21 separates the major axis of the fourth slot 292a4 and a major axis of the fifth slot 292a5 of the first column of slots 292a.

The PCB 268 includes a second column of slots 292b. The slots 292b1, 292b2, 292b3, 292b4, 292b5 of the second column of slots 292b extend from the rear surface of the PCB 268 to the front surface of the PCB 268. A distance H6 separates the first slot 292b1 and the second slot 292b2 of the second column of slots 292b. A distance H8 separates the second slot 292b2 and the third slot 292b3 of the second column of slots 292b. A distance H10 separates the third slot 292b3 and the fourth slot 292b4 of the second column of slots 292b. A distance H12 separates the fourth slot 292b4 and the fifth slot 292b5 of the second column of slots 292b.

A distance H16 separates a major axis of the first slot 292b1 and a major axis of the second slot 292b2 of the second column of slots 292b. A distance H18 separates the major axis of the second slot 292b2 and a major axis of the third slot 292b3 of the second column of slots 292b. A distance H20 separates the major axis of the third slot 292b2 and a major axis of the fourth slot 292b4 of the second column of slots 292b. A distance H22 separates the major axis of the fourth slot 292b4 and a major axis of the fifth slot 292b5 of the second column of slots 292b.

The distance H5 may equal the distance H7. The distance H7 may equal the distance H11. The distance H5 may equal the distance H9. The distance H15 may equal the distance H17. The distance H17 may equal the distance H21. The distance H15 may equal the distance H19.

The distance H12 may equal the distance H10. The distance H10 may equal the distance H6. The distance H12 may equal the distance H8. The distance H22 may equal the distance H20. The distance H20 may equal the distance H16. The distance H22 may equal the distance H18.

The distance H15 may be greater than the distance H16. The distance H18 may be greater than the distance H17. The distance H19 may be greater than the distance H20. The distance H22 may be greater than the distance H21.

The PCB 268 may also include a plurality of metallic pads. A first metallic pad 304a surrounds the fifth slot 292b5 of the second column of slots 292b. A second metallic pad 304b surrounds the first slot 292a1 of the first column of slots 292a. A third metallic pad 294a surrounds the fourth slot 292b4 and the third slot 292b3 of the second column of slots 292b. A fourth metallic pad 294b surrounds the second slot 292b2 and the first slot 292b1 of the second column of slots 292b. A fifth metallic pad 294c surrounds the second slot 292a2 and the third slot 292a3 of the first column of slots 292a. A sixth metallic pad 294d surrounds the fourth slot 292a4 and the fifth slot 292a4 of the first column of slots 292a.

The PCB 268 may also include a plurality of metallic traces. A first metallic trace 296a runs from the third metallic pad 294a to a via 298a. A second metallic trace 296b runs from the fourth metallic pad 294b to a via 298b. A third metallic trace 296c runs from the fifth metallic pad 294c to a via 298c. A fourth metallic trace 296d runs from the sixth metallic pad 294d to a via 298d.

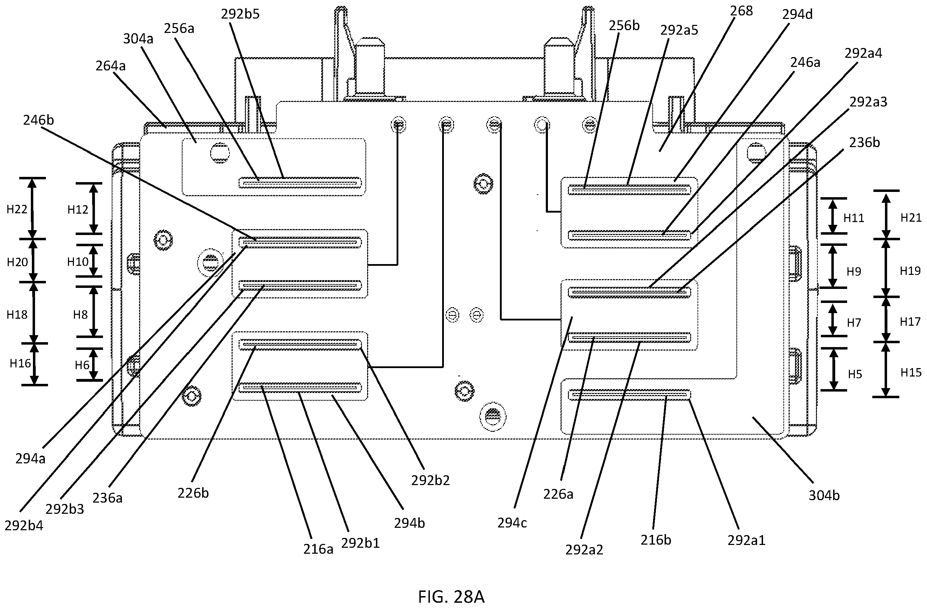

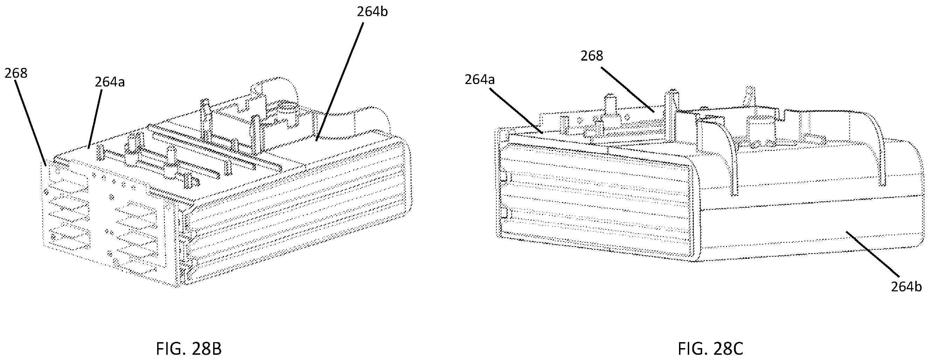

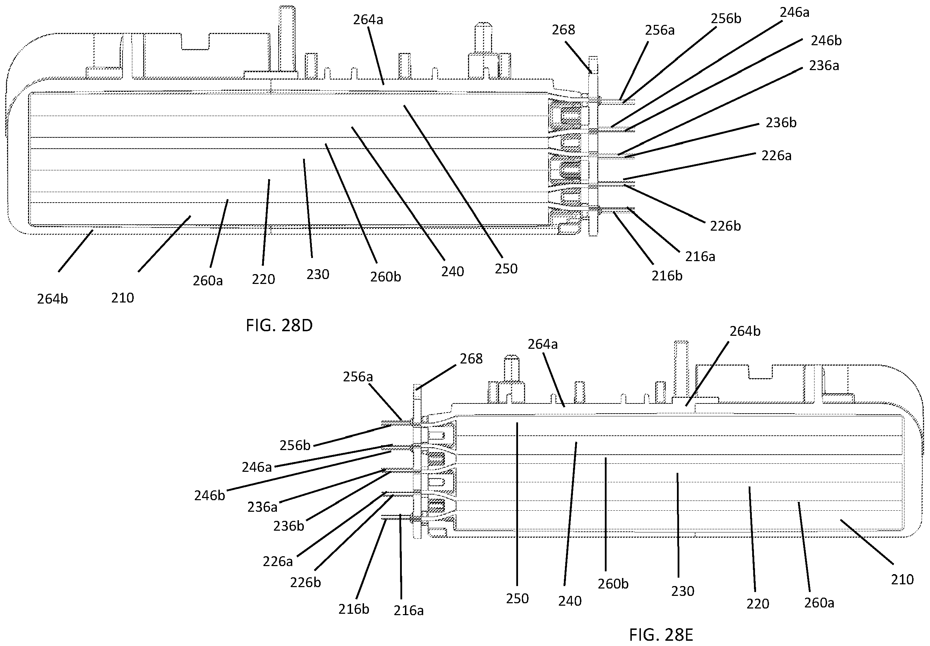

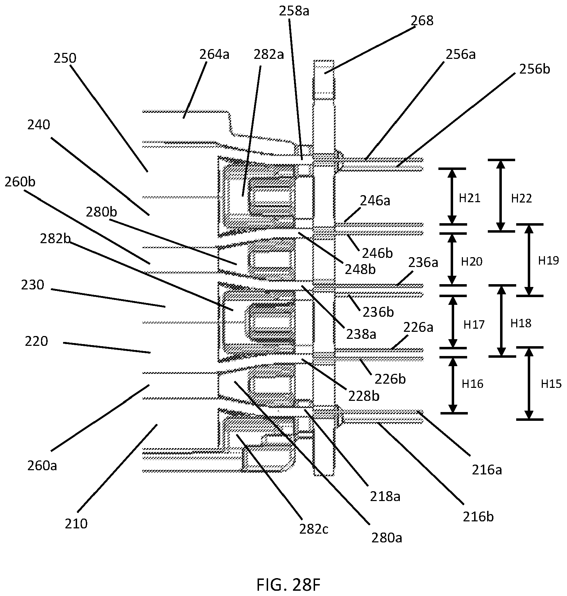

As illustrated in FIGs. 28A, 28B, 28C, 28D, 28E and 28F, the rear surface of the PCB 268 is mounted upon/affixed to the front wall of the front portion 264a of the cell holder 264. The first column of slots 292a of the PCB 268 correspond to and align with the first column of slots 284a of the front portion 264a of the cell holder 264 and the second column of slots 292b of the PCB 268 correspond to and align with the second column of slots 284b of the front portion 264a of the cell holder 264. In alternate embodiments the PCB 268 may be held in place relative to the cell holder 264 by a fixture on an internal surface of the battery pack housing.

As such, when the PCB 268 is mounted upon/affixed to the front portion 264a of the cell holder 264 the first tabs 216b, 226a, 236b, 246a and 256b of the first battery cell 210, the second battery cell 220, the third battery cell 230, fourth battery cell 240, and the fifth battery cell 250, respectively, are received in the first slot 292a1, the second slot 292a2, the third slot 292a3, the fourth slot 292a4, and the fifth slot 292a5 of the first column of slots 292 of the PCB 268, respectively. And, when the PCB 268 is mounted upon/affixed to the front portion 264a of the cell holder 264 the second tabs 216a, 226b, 236a, 246b and 256a of the first battery cell 210, the second battery cell 220, the third battery cell 230, fourth battery cell 240, and the fifth battery cell 250, respectively, are received in the first slot 292b1, the second slot 292b2, the third slot 292b3, the fourth slot 292b4, and the fifth slot 292b5 of the second column of slots 292 of the PCB 268, respectively. As shown in Fig. 28F, secondary heat seals (of which secondary heat seals 218a, 228b, 238a, 248b, and 258a are shown) are provided about the corresponding one of the first and second cell tabs.

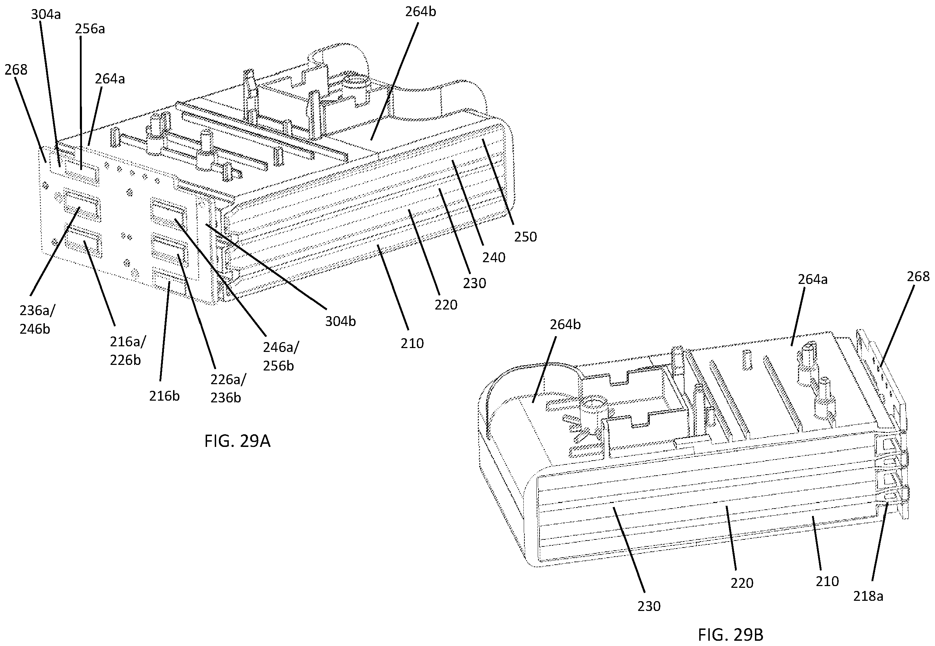

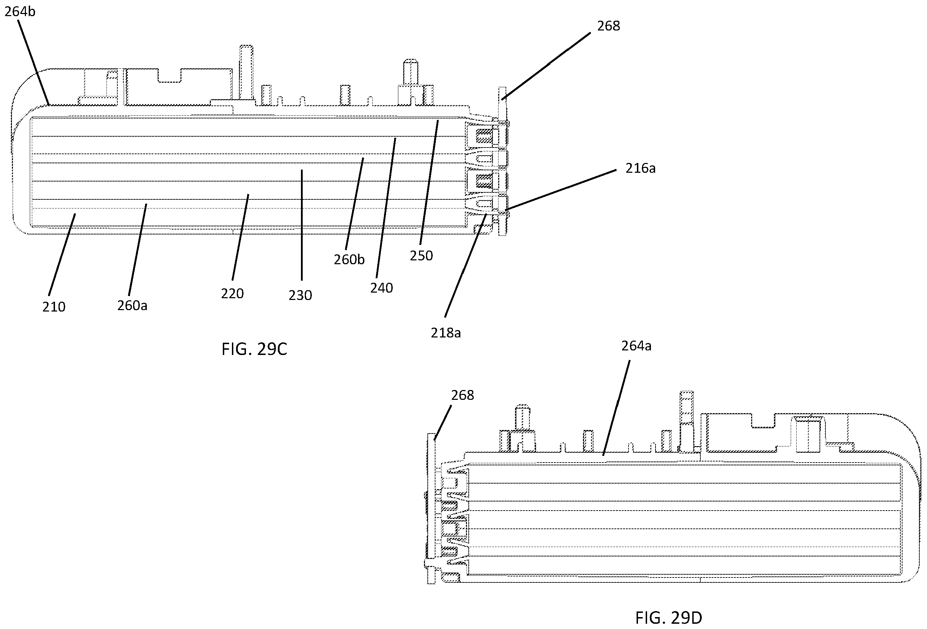

As illustrated in FIGs. 29A, 29B, 29C and 29D the ends of the cell tabs are folded to connect to an associated metallic pad. Specifically, the second cell tab 256a of the fifth battery cell 250 (the most positive cell tab once all of the battery cells of the set of battery cells 200 are connected in series) is folded to overlap the first metallic pad 304a. The first cell tab 216b of the first battery cell 210 (the most negative cell tab once all of the battery cells of the set of battery cells 200 are connected in series) is folded to overlap the second metallic pad 304b. The second cell tab 246b of the fourth battery cell 240 and the second cell tab 236a are folded to overlap each other and the third metallic pad 294a. The second cell tab 226b of the second battery cell 220 and the second cell tab 216a of the first battery cell 210 are folded to overlap each other and the fourth metallic pad 294b. The first cell tab 226a of the second battery cell 220 and the first cell tab 236b of the third battery cell 230 are folded to overlap each other and the fifth metallic pad 294c. The first cell tab 246a of the fourth battery cell 240 and the first cell tab 256b of the fifth battery cell 250 are folded to overlap each other and the sixth metallic pad 294d.

Thereafter, the folded tabs are electrically coupled to the corresponding metallic pads. Specifically, tab 256a is electrically coupled to metallic pad 204a, tab 216b is electrically coupled to metallic pad 304b, tabs 236a and 246b are electrically coupled to metallic pad 294a, tabs 216a and 226b are electrically coupled to metallic pad 294b, tabs 226a and 236b are electrically coupled to metallic pad 294c and tabs 246a and 256b are electrically coupled to metallic pad 294d. The electric coupling may be accomplished through welding, e.g., laser welding, sonic welding or by mechanical connections.

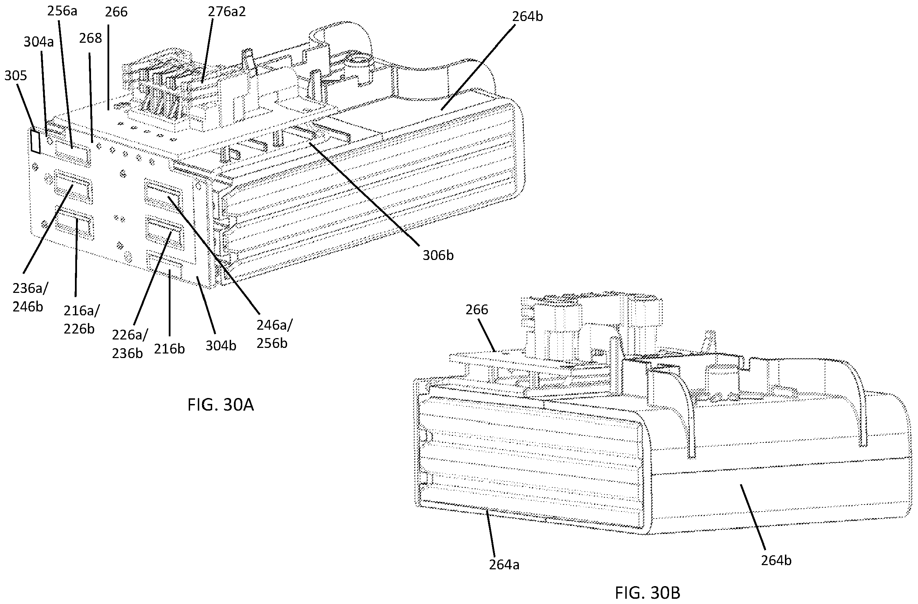

As illustrated in FIGs. 30A and 30B, the primary PCB 266 is mounted on/affixed to the cell holder 268. A connector 306a (see FIG. 11C), e.g., a wire or metal strap, connects the first metallic pad 304a to the positive power terminal 276a1 and a connector, e.g., and a connector 306b (see FIGs. 11B and 30A), e.g., also a wire or metal strap, connects the second metallic pad 304b to the negative power terminal 276a2. A fuse 305, which may be a surface-mount electronic fuse or a metal-strap fuse, may be provided on the current path of the first metallic pad 304a for overcurrent protection. A connector (not shown) connects the vias 298a, 298b, 298c, 298d of the secondary PCB 268 to corresponding first, second, third and fourth vias on the primary PCB 266. The first, second, third and fourth vias on the primary PCB 266 are electrically coupled to the third intercell terminal 276b5, the first intercell terminal 276b3, the second intercell terminal 276b4, and the fourth intercell terminal 276b6, respectively.

Once the core pack 262 is completed, it is placed in the lower housing 104. Thereafter, the upper housing 102 is placed over the core pack 262 and coupled to the lower housing 104.

This method of assembly of the battery pack 100 is but one example. The steps may be completed in an alternate order. For example, the secondary PCB 268 may be affixed to the front portion 264a of the cell holder 264 prior to inserting any of the battery cells of the set of battery cells 200. As such, upon inserting the battery cells 210, 220, 230, 240, and 250 into the front portion 264a of the cell holder 264, the various tabs would be inserted through both a corresponding slot 284 of the front portion 264a of the cell holder 264 and a corresponding slot 292 of the secondary PCB 268.

With regard to the total height of foam 260 in the battery pack and the height (H2) of a particular foam element, 260a or 260b, the total height of all of the foam elements in the pack can be calculated as the thickness of the battery cell times the number of battery cells in the battery pack. This number can be multiplied by a percentage ranging from approximately 5% to 15%, more particularly by a percentage ranging from approximately 7.5% to 12.5% and more particularly by a percentage of approximately 10 %. The following are exemplary equations:

$$\text{EQ. 1} \quad \text{(Cell thickness x number of cells) x 10\% = total height of foam}$$

If all foam elements are of equal height, then

$$\text{EQ. 2} \quad \text{Total height of foam/number of foam elements = height of each foam element (H2)}$$

The cell holder 264 according to the present disclosure configures the battery cell tabs 216 to optimize the spacing between the tabs 216 of adjacent battery cells of the set of battery cells 200 once the tabs 216 are connected taking into consideration the relative voltages of adjacent battery cells, e.g., 210, 220, 230 once the set of battery cells 200 are connected.

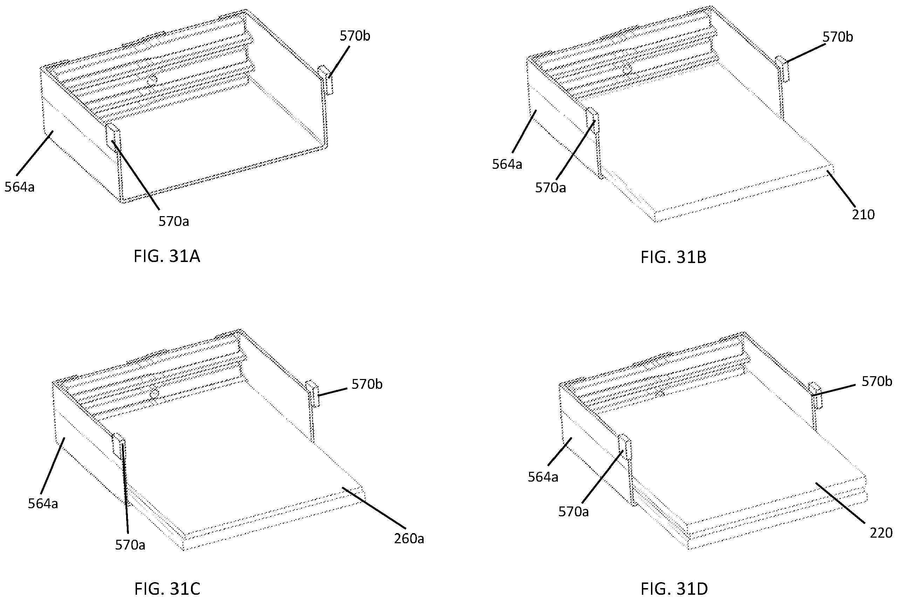

Referring to FIGs. 31A - 31K, there is illustrated an alternate, exemplary core pack 562 in accordance with the present disclosure and a method for assembling the alternate, exemplary core pack in accordance with the present disclosure.

In this embodiment, the cell holder 564 includes a front, receiving portion 564a, a front top portion 564b, and a rear portion 564c. The front, receiving portion includes an array of ribs and slots similar to the array of ribs and slots disclosed and described above with regard to FIGs. 12 - 26. As such, the ribs and the slots of the cell holder 564 will not be described again. The battery cells and the insulating elements (material) of this embodiment are similar to the battery cells and insulating elements disclosed and described above with regard to FIGs. 9 - 30. As such, the battery cells and the insulating elements and the manner in which they are received in the cell holder will not be described again. The front, receiving portion 564a also includes a pair of mechanical, connection tabs 570a, 570b. The front top portion 564b also includes a first pair of mechanical, connection tabs 572a, 572b and a second pair of mechanical, connection tabs 574a, 574b. The rear portion 564c also includes a pair of mechanical, connection tabs 576a, 576b.

As illustrated in FIG. 31A, a first step of the method of assembling the core pack 562 includes providing an empty front, receiving portion 564a of the cell holder 564. The front, receiving portion 564a of the cell holder 564 includes a front wall, a bottom wall, a first side wall and a second side wall. Together, these walls form a receiving space for receiving the battery cells and the foam insulators.

As illustrated in FIG. 31B, a second step of the method of assembling the core pack 562 includes placing a first battery cell into the front receiving portion 564a. As illustrated in FIG. 31C, a third step of the method of assembling the core pack 562 includes placing a first foam insulating element into the front receiving portion 564a. As illustrated in FIG. 31D, a fourth step of the method of assembling the core pack 562 includes placing a second battery cell into the front receiving portion 564a.

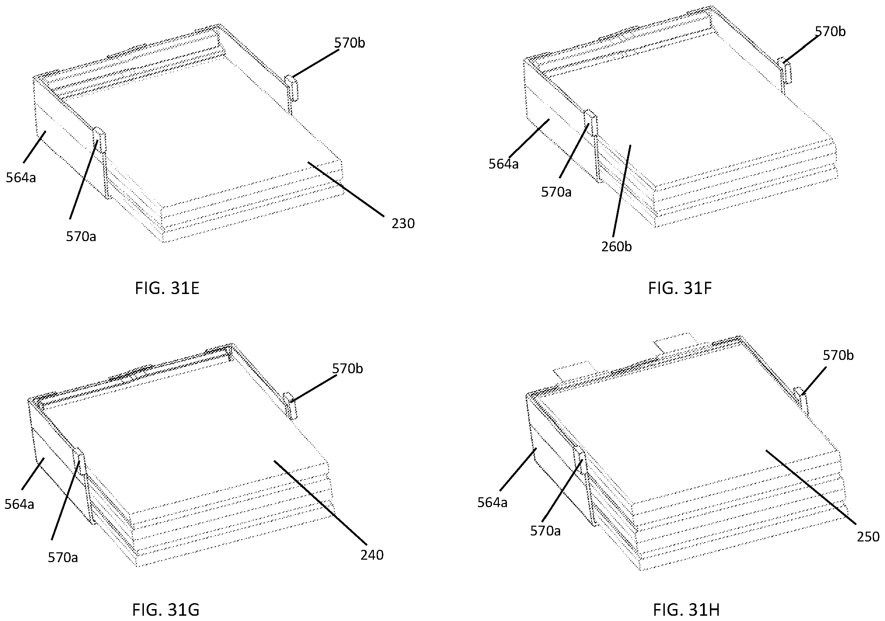

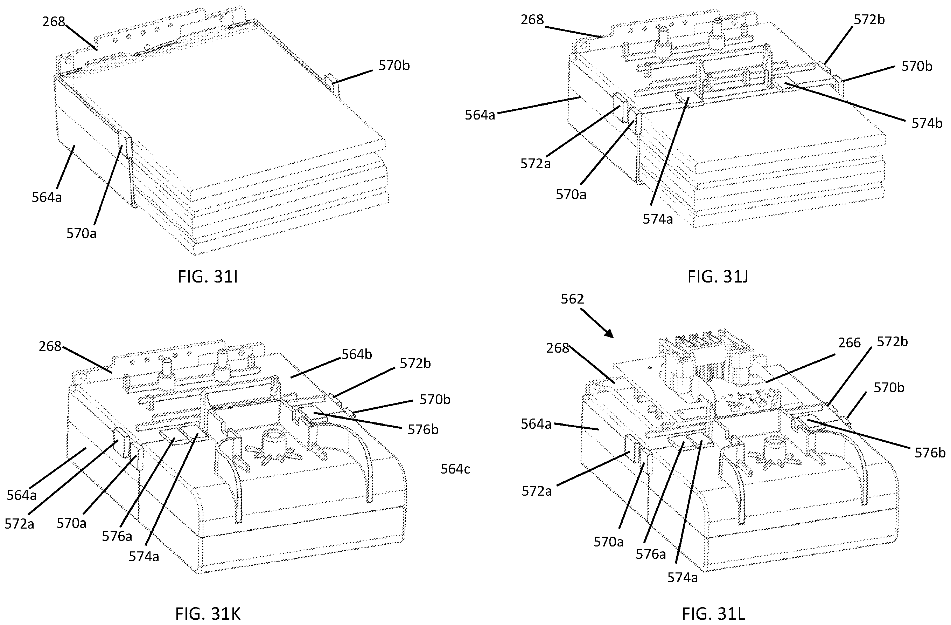

As illustrated in FIG. 31E, a fifth step of the method of assembling the core pack 562 includes placing a third battery cell into the front receiving portion 564a. As illustrated in FIG. 31F, a sixth step of the method of assembling the core pack 562 includes placing a second foam insulating element into the front receiving portion 564a. As illustrated in FIG. 31G, a seventh step of the method of assembling the core pack 562 includes placing a fourth battery cell into the front receiving portion 564a. As illustrated in FIG. 31H, an eighth step of the method of assembling the core pack 562 includes placing a fifth battery cell into the front receiving portion 564a. As illustrated in FIG. 31I, a ninth step of the method of assembling the core pack 562 includes affixing a secondary PCB to the front receiving portion 564a.

As illustrated in FIG. 31J, a tenth step of the method of assembling the core pack 562 includes placing the front top portion 564b of the cell holder 564 onto (coupling with) the front receiving portion 564a of the cell holder 564. In this step the pair of mechanical, connection tabs 570a, 570b of the front, receiving portion 564a of the cell holder 564 are mated to and affixed to the front top portion 564b of the cell holder 564 and the first pair of mechanical, connection tabs 572a, 572b of the front top portion 564b of the cell holder 564 are mated to and affixed to the front, receiving portion 564a of the cell holder 564. The various tabs may be affixed to the mated part by friction, glue, sonic welding or a similar fastening method.

As illustrated in FIG. 31K, an eleventh step of the method of assembling the core pack 562 includes coupling the rear portion 564c of the cell holder 564 with the front receiving portion 564a and the front top portion 564b of the cell holder 564. In this step, the pair of mechanical, connection tabs 570a, 570b of the front, receiving portion 564a of the cell holder 564 are mated to and affixed to the rear receiving portion 564c of the cell holder 564 and the second pair of mechanical, connection tabs 574a, 574b of the front top portion 564b of the cell holder 564 are mated to and affixed to the rear receiving portion 564c of the cell holder 564. Again, he various tabs may be affixed to the mated part by friction, glue, sonic welding or a similar fastening method.

As illustrated in FIG. 31L, a twelfth step of the method of assembling the core pack 562 includes coupling the primary PCB and the terminal block to the cell holder 564 to complete the core pack 562. Thereafter, the core pack 562 is placed in a battery housing, as noted above, to complete the battery pack.

This method of assembly of the core pack 562 is but one example. The steps may be completed in an alternate order. For example, the secondary PCB 268 may be affixed to the front portion 564a of the cell holder 564 prior to inserting any of the battery cells of the set of battery cells 200. As such, upon inserting the battery cells 210, 220, 230, 240, and 250 into the front portion 564a of the cell holder 564, the various tabs would be inserted through both a corresponding slot 284 of the front portion 564a of the cell holder 564 and a corresponding slot 292 of the secondary PCB 268.

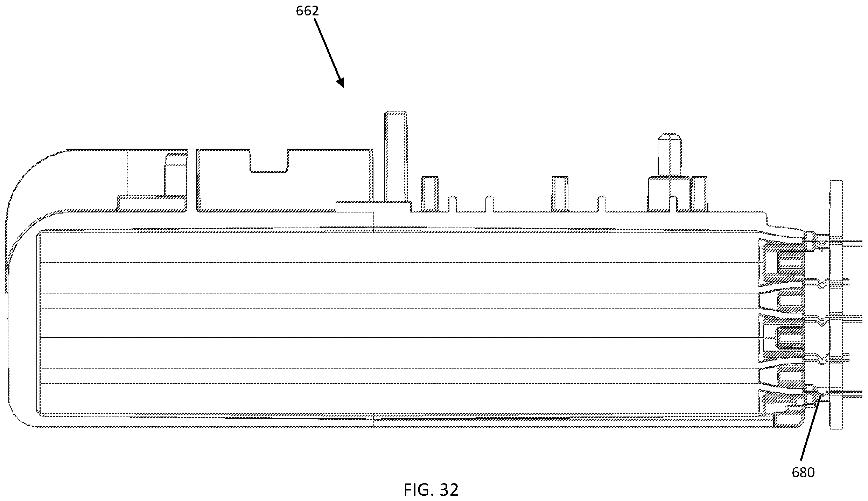

As illustrated in FIG. 32, in an alternate, exemplary embodiment of the core pack 662, as an added layer of protection, a strain relief 680 feature may be added to the leads/tabs via a pre-kink or pre-bend. The strain relief 680 features compensate for movement of the battery cells during vibration of the battery pack or thermal expansion and contraction of the battery cells.

Example embodiments have been provided so that this disclosure will be thorough, and to fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Terms of degree such as "generally," "substantially," "approximately," and "about" may be used herein when describing the relative positions, sizes, dimensions, or values of various elements, components, regions, layers and/or sections. These terms mean that such relative positions, sizes, dimensions, or values are within the defined range or comparison (e.g., equal or close to equal) with sufficient precision as would be understood by one of ordinary skill in the art in the context of the various elements, components, regions, layers and/or sections being described.

Numerous modifications may be made to the exemplary implementations described above. These and other implementations are within the scope of this application.

**Claims**

1. A battery pack (100), comprising:

   at least two pouch battery cells (210, 220), each cell having a first tab (216b, 226a) and a second tab (216a, 226b); a battery cell holder (226) having an array of slots (284) extending from an interior side of a first wall to an exterior side of the first wall, the array having a first column of a plurality of slots (284a) and a second column of a plurality of slots (284b) generally parallel and adjacent to the first column of slots, the slots of the first column of slots being offset from the slots of the second column of slots in a direction of the columns, wherein each slot is configured to receive a tab of one of the battery cells; the first column of slots having a first slot and a second slot and the second column of slots having a first slot and a second slot; wherein a distance (H15) between a major axis of the first slot of the first column and a major axis of the second slot of the first column is greater than a distance (H16) between a major axis of the first slot of the second column and a major axis of the second slot of the second column.

2. The battery pack (100), as recited in claim 1, further comprising: a first rib (280a) extending from the interior side of the first wall, the rib having a first portion between the first slot and the second slot of the first column of slots and a second portion between the first slot and the second slot of the second column of slots.

3. The battery pack (100), as recited in claim 2, wherein the first portion of the first rib has a first height (H5) and the second portion of the first rib has a second height (H6) and wherein the first height (H5) is greater than the second height (H6).

4. The battery pack (100), as recited in claim 2, wherein the first rib comprises a transition portion (W3) extending from the first portion to the second portion and wherein the transition portion of the first rib transitions from the first height (H5) to the second height (H6).

5. The battery pack (100), as recited in claim 2, further comprising: a second rib (280b) extending from the interior side of the first wall, the rib having a first portion between the second slot and the third slot of the first column of slots and a second portion between the second slot and the third slot of the second column of slots.

6. The battery pack (100), as recited in claim 5, wherein the first portion of the second rib has a first height (H7) and the second portion of the second rib has a second height (H8) and wherein the first height (H7) is less than the second height (H8).

7. The battery pack (100), as recited in claim 5, wherein the second rib comprises a transition portion (W3) extending from the first portion to the second portion.

8. The battery pack (100), as recited in claim 7, wherein the transition portion of the second rib transitions from the first height (H7) to the second height (H8).

9. The battery pack (100), as recited in claim 1, wherein the first column of slots includes a third slot and the second column of slots includes a third slot, wherein a distance (H17) between a major axis of the third slot of the first column and the major axis of the second slot of the first column is less than the distance (H15) between the major axis of the first slot of the first column and the major axis of the second slot of the first column.

10. The battery pack (100), as recited in claim 9, wherein a distance (H18) between a major axis of the third slot of the second column and the major axis of the second slot of the first column is greater than the distance (H17) between the major axis of the third slot of the first column and the major axis of the second slot of the first column.

11. The battery pack (100), as recited in claim 9, wherein a distance (H18) between the major axis of the third slot of the second column and the major axis of the second slot of the first column is greater than the distance (H16) between the major axis of the first slot of the second column and the major axis of the second slot of the second column.

12. The battery pack (100), as recited in claim 9, wherein the distance (H15) between the major axis of the first slot of the first column and the major axis of the second slot of the first column is equal to a distance (H18) between the major axis of the third slot of the second column and the major axis of the second slot of the first column.

13. The battery pack (100), as recited in claim 9, wherein the distance (H16) distance between the major axis of the first slot of the second column and the major axis of the second slot of the second column is equal to the distance (H17) between the major axis of the third slot of the first column and the major axis of the second slot of the first column.

**Patentansprüche**

1. Batteriepack (100), umfassend:

   mindestens zwei Pouch-Batteriezellen (210, 220), wobei jede Zelle eine erste Lasche (216b, 226a) und eine zweite Lasche (216a, 226b) aufweist;
   einen Batteriezellenhalter (226), der eine Anordnung von Schlitzen (284) aufweist, die sich von einer Innenseite einer ersten Wand zu einer Außenseite der ersten Wand erstrecken, wobei die Anordnung eine erste Kolonne mit einer Vielzahl von Schlitzen (284a) und eine zweite Kolonne mit einer Vielzahl von Schlitzen (284b) aufweist, die im Allgemeinen parallel sind und an die ersten Kolonne von Schlitzen angrenzen, wobei die Schlitze der ersten Kolonne von Schlitzen von den Schlitzen der zweiten Kolonne von Schlitzen in einer Richtung der Kolonnen versetzt sind, wobei jeder Schlitz dazu konfiguriert ist, eine Lasche einer der Batteriezellen aufzunehmen;
   wobei die erste Kolonne von Schlitzen einen ersten Schlitz und einen zweiten Schlitz aufweist und die zweite Kolonne von Schlitzen einen ersten Schlitz und einen zweiten Schlitz aufweist;
   wobei ein Abstand (H15) zwischen einer Hauptachse des ersten Schlitzes der ersten Kolonne und einer Hauptachse des zweiten Schlitzes der ersten Kolonne größer ist als ein Abstand (H16) zwischen einer Hauptachse des ersten Schlitzes der zweiten Kolonne und einer Hauptachse des zweiten Schlitzes der zweiten Kolonne.

2. Batteriepack (100) nach Anspruch 1, weiter umfassend:
   eine erste Rippe (280a), die sich von der Innenseite der ersten Wand erstreckt, wobei die Rippe einen ersten Abschnitt zwischen dem ersten Schlitz und dem zweiten Schlitz der ersten Kolonne von Schlitzen und einen zweiten Abschnitt zwischen dem ersten Schlitz und dem zweiten Schlitz der zweiten Kolonne von Schlitzen aufweist.

3. Batteriepack (100) nach Anspruch 2, wobei der erste Abschnitt der ersten Rippe eine erste Höhe (H5) aufweist, und der zweite Abschnitt der ersten Rippe eine zweite Höhe (H6) aufweist, und wobei die erste Höhe (H5) größer ist als die zweite Höhe (H6).

4. Batteriepack (100) nach Anspruch 2, wobei die erste Rippe einen Übergangsabschnitt (W3) umfasst, der sich von dem ersten Abschnitt zu dem zweiten Abschnitt erstreckt, und wobei der Übergangsabschnitt der ersten Rippe von der ersten Höhe (H5) auf die zweite Höhe (H6) übergeht.

5. Batteriepack (100) nach Anspruch 2, weiter umfassend:
   eine zweite Rippe (280b), die sich von der Innenseite der ersten Wand erstreckt, wobei die Rippe einen ersten Abschnitt zwischen dem zweiten Schlitz und dem dritten Schlitz der ersten Kolonne von Schlitzen und einen zweiten Abschnitt zwischen dem zweiten Schlitz und dem dritten Schlitz der zweiten Kolonne von Schlitzen aufweist.

6. Batteriepack (100) nach Anspruch 5, wobei der erste Abschnitt der zweiten Rippe eine erste Höhe (H7) aufweist, und der zweite Abschnitt der zweiten Rippe eine zweite Höhe (H8) aufweist, und wobei die erste Höhe (H7) kleiner ist als die zweite Höhe (H8).

7. Batteriepack (100) nach Anspruch 5, wobei die zweite Rippe einen Übergangsabschnitt (W3) umfasst, der sich von dem ersten Abschnitt zu dem zweiten Abschnitt erstreckt.

8. Batteriepack (100) nach Anspruch 7, wobei der Übergangsabschnitt der zweiten Rippe von der ersten Höhe (H7) auf die zweite Höhe (H8) übergeht.

9. Batteriepack (100) nach Anspruch 1, wobei die erste Kolonne von Schlitzen einen dritten Schlitz beinhaltet, und die zweite Kolonne von Schlitzen einen dritten Schlitz beinhaltet, wobei ein Abstand (H17) zwischen einer Hauptachse des dritten Schlitzes der ersten Kolonne und der Hauptachse des zweiten Schlitzes der ersten Kolonne kleiner ist als der Abstand (H15) zwischen der Hauptachse des ersten Schlitzes der ersten Kolonne und der Hauptachse des zweiten Schlitzes der ersten Kolonne.

10. Batteriepack (100) nach Anspruch 9, wobei ein Abstand (H18) zwischen einer Hauptachse des dritten Schlitzes der zweiten Kolonne und der Hauptachse des zweiten Schlitzes der ersten Kolonne größer ist als der Abstand (H17) zwischen der Hauptachse des dritten Schlitzes der ersten Kolonne und der Hauptachse des zweiten Schlitzes der ersten Kolonne.

11. Batteriepack (100) nach Anspruch 9, wobei ein Abstand (H18) zwischen der Hauptachse des dritten Schlitzes der zweiten Kolonne und der Hauptachse des zweiten Schlitzes der ersten Kolonne größer ist als der Abstand (H16) zwischen der Hauptachse des ersten Schlitzes der zweiten Kolonne und der Hauptachse des zweiten Schlitzes der zweiten Kolonne.

12. Batteriepack (100) nach Anspruch 9, wobei der Abstand (H15) zwischen der Hauptachse des ersten Schlitzes der ersten Kolonne und der Hauptachse des zweiten Schlitzes der ersten Kolonne gleich einem Abstand (H18) zwischen der Hauptachse des dritten Schlitzes der zweiten Kolonne und der Hauptachse des zweiten Schlitzes der ersten Kolonne ist.

13. Batteriepack (100) nach Anspruch 9, wobei der Abstand (H16) zwischen der Hauptachse des ersten Schlitzes der zweiten Kolonne und der Hauptachse des zweiten Schlitzes der zweiten Kolonne gleich dem Abstand (H17) zwischen der Hauptachse des dritten Schlitzes der ersten Kolonne und der Hauptachse des zweiten Schlitzes der ersten Kolonne ist.

## Revendications

1. Bloc-batterie (100) comprenant :

   au moins deux éléments de batterie de type poche (210, 220), chaque élément présentant une première languette (216b, 226a) et une seconde languette (216a, 226b) ;
   un support de élément de batterie (226) présentant un réseau de fentes (284) s'étendant depuis un côté intérieur d'une première paroi jusqu'à un côté extérieur de la première paroi, le réseau présentant une première colonne d'une pluralité de fentes (284a) et une seconde colonne d'une pluralité de fentes (284b) généralement parallèle et adjacente à la première colonne de fentes, les fentes de la première colonne de fentes étant décalées par rapport aux fentes de la seconde colonne de fentes dans une direction des colonnes, dans lequel chaque fente est configurée pour recevoir une languette de l'un des éléments de batterie ;
   la première colonne de fentes présentant une première fente et une deuxième fente et la seconde colonne de fentes présentant une première fente et une deuxième fente ;
   dans lequel une distance (H15) entre un axe majeur de la première fente de la première colonne et un axe majeur de la deuxième fente de la première colonne est plus importante qu'une distance (H16) entre un axe majeur de la première fente de la seconde colonne et un axe majeur de la deuxième fente de la seconde colonne.

2. Bloc-batterie (100) selon la revendication 1, comprenant en outre :
   une première nervure (280a) s'étendant depuis le côté intérieur de la première paroi, la nervure présentant une première partie entre la première fente et la deuxième fente de la première colonne de fentes et une seconde partie entre la première fente et la deuxième fente de la seconde colonne de fentes.

3. Bloc-batterie (100) selon la revendication 2, dans lequel la première partie de la première nervure présente une première hauteur (H5) et la seconde partie de la première nervure présente une seconde hauteur (H6) et dans lequel la première hauteur (H5) est plus importante que la seconde hauteur (H6).

4. Bloc-batterie (100) selon la revendication 2, dans lequel la première nervure comprend une partie de transition (W3) s'étendant depuis la première partie jusqu'à la seconde partie et dans lequel la partie de transition de la première nervure passe de la première hauteur (H5) à la seconde hauteur (H6).

5. Bloc-batterie (100) selon la revendication 2, comprenant en outre :
   une seconde nervure (280b) s'étendant depuis le côté intérieur de la première paroi, la nervure présentant une première partie entre la deuxième fente et la troisième fente de la première colonne de fentes et une seconde partie entre la deuxième fente et la troisième fente de la seconde colonne de fentes.

6. Bloc-batterie (100) selon la revendication 5, dans lequel la première partie de la seconde nervure présente une première hauteur (H7) et la seconde partie de la seconde nervure présente une seconde hauteur (H8) et dans lequel la première hauteur (H7) est inférieure à la seconde hauteur (H8).

7. Bloc-batterie (100) selon la revendication 5, dans lequel la seconde nervure comprend une partie de transition (W3) s'étendant depuis la première partie jusqu'à la seconde partie.

8. Bloc-batterie (100) selon la revendication 7, dans lequel la partie de transition de la seconde nervure passe de la première hauteur (H7) à la seconde hauteur (H8).

9. Bloc-batterie (100) selon la revendication 1, dans lequel la première colonne de fentes inclut une troisième fente et la seconde colonne de fentes inclut une troisième fente, dans lequel une distance (H17) entre un axe majeur de la troisième fente de la première colonne et l'axe majeur de la deuxième fente de la première colonne est inférieure à la distance (H15) entre l'axe majeur de la première fente de la première colonne et l'axe majeur de la deuxième fente de la première colonne.

10. Bloc-batterie (100) selon la revendication 9, dans lequel une distance (H18) entre un axe majeur de la troisième fente de la seconde colonne et l'axe majeur de la deuxième fente de la première colonne est plus importante que la distance (H17) entre l'axe majeur de la troisième fente de la première colonne et l'axe majeur de la deuxième fente de la première colonne.

11. Bloc-batterie (100) selon la revendication 9, dans lequel une distance (H18) entre l'axe majeur de la troisième fente de la seconde colonne et l'axe majeur de la deuxième fente de la première colonne est plus importante que la distance (H16) entre l'axe majeur de la première fente de la seconde colonne et l'axe majeur de la deuxième fente de la seconde colonne.

12. Bloc-batterie (100) selon la revendication 9, dans lequel la distance (H15) entre l'axe majeur de la première fente de la première colonne et l'axe majeur de la deuxième fente de la première colonne est égale à une distance (H18) entre l'axe majeur de la troisième fente de la seconde colonne et l'axe majeur de la deuxième fente de la première colonne.

13. Bloc-batterie (100) selon la revendication 9, dans lequel la distance (H16) entre l'axe majeur de la première fente de la seconde colonne et l'axe majeur de la deuxième fente de la seconde colonne est égale à la distance (H17) entre l'axe majeur de la troisième fente de la première colonne et l'axe majeur de la deuxième fente de la première colonne.

FIG. 1

PRIOR ART

FIG. 2

PRIOR ART

FIG. 4

FIG. 3

FIG. 5

FIG. 6

FIG. 8

FIG. 7

FIG. 9A

FIG. 9B

EP 3 908 430 B1

L

260    220    226b

H1
H2    H23
H1

210    216a

Y

FIG. 9C

226a    260    220

H1
H23    H2
H1

210

X

216b

FIG. 9D

FIG. 10

FIG. 11A

EP 3 908 430 B1

FIG. 11B

FIG. 11C

27

FIG. 12A

FIG. 12B

FIG. 13

EP 3 908 430 B1

FIG. 14

EP 3 908 430 B1

FIG. 15B

FIG. 16B

FIG. 15A

FIG. 16A

FIG. 17B

FIG. 17A

FIG. 18B

FIG. 18A

FIG. 19B

FIG. 19A

FIG. 20B

FIG. 20A

FIG. 21A

FIG. 21B

FIG. 21C

FIG. 21D

FIG. 22B

FIG. 23B

FIG. 22A

FIG. 23A

FIG. 24B

FIG. 25B

FIG. 24A

FIG. 25A

FIG. 26B

FIG. 26A

FIG. 27

FIG. 28A

FIG. 28C

FIG. 28B

256a
256b
246a
246b
236a
236b
226a
226b
216a
216b
268
264a
250
240
260b
230
220
260a
210
264b

FIG. 28D

264b
260a
220
230
260b
240
250
210

264a
268
256a
256b
246a
246b
236a
236b
226a
226b
216a
216b

FIG. 28E

FIG. 28F

FIG. 29A

FIG. 29B

FIG. 29C

FIG. 29D

FIG. 30A

FIG. 30B

FIG. 31A

FIG. 31B

FIG. 31C

FIG. 31D

FIG. 31E

FIG. 31F

FIG. 31G

FIG. 31H

FIG. 31I

FIG. 31J

FIG. 31K

FIG. 31L

FIG. 32

**REFERENCES CITED IN THE DESCRIPTION**

**Patent documents cited in the description**

- US 62889616
- EP 2787560 B1

- US 9040190 B